(19) Europäisches Patentamt
European Patent Office
Office européen des brevets

(11) **EP 3 135 367 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16192526.8**

(22) Anmeldetag: **15.08.2014**

(51) Int Cl.:
*B01D 61/22* *(2006.01)*     *B01D 65/02* *(2006.01)*
*B01D 61/32* *(2006.01)*

(54) **STEUERVERFAHREN FÜR EIN FILTERSYSTEM**

CONTROL METHOD FOR A FILTER SYSTEM

PROCÉDÉ DE COMMANDE POUR UN SYSTÈME DE FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.03.2017 Patentblatt 2017/09**

(62) Dokumentnummer(n) der früheren Anmeldung(en) nach Art. 76 EPÜ:
**14181141.4 / 2 985 069**

(73) Patentinhaber: **Grundfos Holding A/S**
**8850 Bjerringbro (DK)**

(72) Erfinder:
• **Dominiak, Dominik**
**91- 718 Lodz (PL)**
• **Appelt Vibe Svendsen, Jacob**
**8600 Silkeborg (DK)**
• **Rasmussen, Christian**
**8830 Tjele (DK)**
• **Hoejsholt, Rune Haubjerg**
**8870 Langa (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
WO-A1-2013/163146     JP-A- 2013 052 326
US-A1- 2007 138 092     US-A1- 2013 075 331

• **Matthias Kraume: "9.5 Druckgetriebene Membranverfahren" In: "Transportvorgänge in der Verfahrenstechnik", 14 May 2014 (2014-05-14), Springer, Berlin, Heidelberg, XP055418615, ISBN: 978-3-642-25149-8 pages 299-313,**

EP 3 135 367 B1

**Beschreibung**

Die Erfindung betrifft ein Steuerverfahren für ein Filtersystem, welches wenigstens ein Filterelement aufweist.

Es sind Filtersysteme bekannt, beispielsweise um Wasser aus Brunnen zur Bereitstellung von Trinkwasser zu filtern. Derartige Filtersysteme weisen ein oder mehrere Filterelemente, insbesondere Membranen auf. Im Laufe der Filtration verschmutzen diese und müssen in regelmäßigen Abständen durch Rückspülen und gegebenenfalls Cleaning-in-Place gereinigt werden. Dabei ist es bekannt, derartige Rückspülungen bzw. physikalische Reinigungen und Cleaning-in-Place-Prozesse in Abhängigkeit des sich ändernden Differenzdruckes über dem Filter zu initiieren.

Die Reinigungs- bzw. Rückspülvorgänge benötigen in der Regel zusätzliche Energie, verbrauchen zuvor filtriertes Wasser und führen zu Nutzungsausfällen der Anlage.

US 2007/0138092 A1 offenbart ein Steuerverfahren für einen Rückspülvorgang eines Membranfilters, bei welchem bei im Wesentlichen konstantem Durchfluss ein Systemdruck, welcher den Transmembrandruck repräsentiert, überwacht wird und ein Rückspülvorgang gestoppt wird, wenn eine Abnahmerate dieses Druckes einen vorbestimmten Grenzwert erreicht.

Es ist Aufgabe der Erfindung, ein Steuerverfahren für ein Filtersystem zu schaffen, durch welches ein Abschaltzeitpunkt eines Rückspülvorganges derart optimiert wird, dass eine möglichst kosteneffektive Produktion bzw. Filtration mit dem Filtersystem ermöglicht wird. Diese Aufgabe wird durch ein Steuerverfahren mit den in Anspruch 1 bekannten Merkmalen gelöst. Weitere bevorzugte Ausführungsformen ergeben sich aus den zugehörigen Unteransprüchen, der nachfolgenden Beschreibung sowie den beigefügten Figuren.

Das erfindungsgemäße Steuerverfahren ist vorgesehen für ein Filtersystem, welches beispielsweise ein Filterelement, insbesondere eine Membran aufweist. Dabei kann es sich um ein Filterelement handeln, welches als Querstromfilter oder Staufiltersystem (deadend-filtrationsystem) ausgebildet ist. Ein solches Filtersystem weist gegebenenfalls ein oder mehrere Pumpen auf, durch welche das zu fördernde Medium zu und durch das Filterelement gefördert wird. Darüber hinaus können Ventile und weitere Pumpen zum Durchführen von physikalischen Reinigungsvorgängen, wie einer Rückspülung, und von Cleaning-in-Place-Prozessen vorgesehen sein. Auch weitere mechanische Reinigungsmittel und gegebenenfalls Luftzufuhrsysteme können vorhanden sein.

Gemäß der Erfindung wird während einer physikalischen Reinigung zwischen zwei Produktionszyklen wenigstens ein Systemparameter kontinuierlich überwacht und die physikalische Reinigung wird so lange ausgeführt bis dieser Systemparameter im Wesentlichen stabil bleibt. Das bedeutet, die physikalische Reinigung wird nicht für eine vorbestimmte Zeitdauer ausgeführt, sondern es wird das Reinigungsergebnis anhand der Überwachung des Systemparameters festgestellt. Dabei wird nicht auf ein vorbestimmtes Reinigungsergebnis, welches beispielsweise durch einen vorbestimmten Trans-Membran-Druck über der Membran bzw. dem Filterelement repräsentiert werden könnte, abgestellt, sondern es wird erfindungsgemäß die physikalische Reinigung dann beendet, wenn das Reinigungsergebnis nicht weiter verbessert werden kann. Dieser Zeitpunkt wird dadurch repräsentiert, dass zu diesem Zeitpunkt der überwachte Systemparameter stabil bleibt und sich nicht weiter ändert. D. h. der Systemparameter muss nicht einen vorbestimmten Grenzwert erreichen, sondern es wird die Änderung des Systemparameters überwacht und die physikalische Reinigung dann beendet, wenn der Systemparameter sich nicht mehr oder im Wesentlichen nicht mehr ändert. Auf diese Weise kann auch die physikalische Reinigung kostenoptimiert durchgeführt werden, da sie nur so lange durchgeführt wird, wie ein Reinigungseffekt erzielt werden kann.

Der überwachte Systemparameter wird dann als stabil angesehen, wenn ein aktuell gemessener Wert des Systemparameters sich um weniger als ein vorbestimmtes Maß von einem laufend bestimmten Durchschnitt dieses Systemparameters unterscheidet, d. h. der Systemparameter wird kontinuierlich aufgezeichnet und es wird von dieser Aufzeichnung kontinuierlich bzw. in vorgegebenen Abständen ein Durchschnittswert gebildet. Der aktuell erfasste Wert wird dann mit dem zuletzt gebildeten Durchschnittswert verglichen. Wenn die Differenz geringer als eine vorbestimmte Abweichung bzw. ein vorbestimmter Grenzwert ist, wird der Systemparameter als stabil angesehen.

Bei dem genannten Systemparameter, welcher während der physikalischen Reinigung überwacht bzw. betrachtet wird, handelt es sich um einen hydraulischen Widerstand des Filtersystems bzw. einen diesen repräsentierenden Kennwert. Erfindungsgemäß wird dabei als hydraulischer Widerstand eine spezifische Beziehung zwischen Druck und Durchfluss in dem Filtersystem betrachtet. Dabei wird nicht nur der Druckabfall über dem Filterelement bzw. der Membran selber sondern auch der hydraulische Widerstand im Rest des Filtersystems mitberücksichtigt.

Zur Erfassung des Druckabfalls im Gesamtsystem wird die Druckdifferenz zwischen Ein- und Ausgang des gesamten Filtersystems betrachtet. Hierzu sind geeignete Druck- und Durchflusssensoren vorgesehen. Der Durchfluss kann gegebenenfalls auch aus den Betriebsparametern einer Förderpumpe, welche das zu fördernde Medium durch das Filterelement fördert, abgeleitet werden.

Eine weitere bevorzugte Aufgabe des erfindungsgemäßen Steuerverfahrens ist es, die Zeitpunkte, zu denen Reinigungsprozesse begonnen und beendet werden, derart zu optimieren, dass der Gesamtbetrieb des Filtersystems kostenoptimiert wird, d. h. dass die Kosten pro erzeugter Permeat-Menge minimiert werden. Dies kann auch unabhängig von den vorangehend beschriebenen Verfahrensmerkmalen erfolgen.

Dazu ist es bevorzugt vorgesehen, den Gesamtenergieverbrauch des Filtersystems kontinuierlich zu erfassen und aufzuzeichnen. Der Energieverbrauch ergibt sich insbesondere aus dem Energieverbrauch vorhandener Pumpen, welche das zu fördernde Medium durch das Filtersystem fördern. Während des Filterzyklus wird dieser Energieverbrauch kontinuierlich aufgezeichnet, insbesondere aufsummiert, sodass der Gesamtenergieverbrauch für einen Filterzyklus bestimmt werden kann. Der Gesamtenergieverbrauch setzt sich dabei zumindest aus dem Energieverbrauch für eine physikalische Reinigung des Filtersystems, beispielsweise einen Rückspülvorgang bzw. Rückspülzyklus, und dem Energieverbrauch für den anschließenden Produktionszyklus, in welchem Permeat produziert wird, bis zu einem vorbestimmten, insbesondere dem aktuellen, Zeitpunkt zusammen. Der gesamte Filterzyklus, für welchen der Gesamtenergieverbrauch bestimmt wird, setzt sich somit zumindest aus einem Rückspülvorgang und einem anschließenden Produktionszyklus, d. h. dem Zyklus, in welchem filtriert wird, zusammen. Dabei wird der Gesamtenergieverbrauch in diesem Filterzyklus bevorzugt bis zu dem vorbestimmten Zeitpunkt aufsummiert.

Vorzugsweise ist weiter vorgesehen, dass ein relativer Energieverbrauch berechnet bzw. bestimmt wird. Dabei erfolgt die Berechnung dieses relativen Energieverbrauchs bevorzugt ebenfalls kontinuierlich, sodass der relative Energieverbrauch zum aktuellen Zeitpunkt bestimmt wird. Die Berechnung des relativen Energieverbrauches erfolgt durch Division des aufgezeichneten bzw. aufsummierten Gesamtenergieverbrauches durch ein Netto-Permeat-Volumen, welches während des Filterzyklus, d. h. dem Produktionszyklus bis zum vorbestimmten Zeitpunkt produziert worden ist. D. h. der relative Energieverbrauch bestimmt den Energieverbrauch pro erzeugtem Netto-Permeat-Volumen zu einem bestimmten Zeitpunkt. Da zu Beginn des Filterzyklus in einer physikalischen Reinigung zunächst Energie verbraucht wird, ohne Permeat zu produzieren, wird im sich anschließenden Produktionszyklus der relative Energieverbrauch pro erzeugtem Netto-Permeat-Volumen erst relativ hoch sein und dann mit der steigenden erzeugten Permeat-Menge abfallen. Das Netto-Permeat-Volumen ist dabei das Permeat-Volumen, welches netto erzeugt wurde, das heißt das erzeugte Permeat-Volumen abzüglich desjenigen Permeat-Volumens, welches beispielsweise für eine physikalische Reinigung wie ein Rückspülen benötigt wird. Das heißt anfangs wird das Netto-Permeat-Volumen gegebenenfalls negativ sein.

Bevorzugt ist vorgesehen, den Zeitpunkt, zu dem eine physikalische Reinigung, beispielsweise ein Rückspülen, gestartet wird, auf einen Zeitpunkt zu legen, an dem der minimale Energieverbrauch gegeben ist. Das bedeutet, eine physikalische Reinigung in Abhängigkeit des so bestimmten relativen Energieverbrauches oder eines von diesem abgeleiteten Kennwertes zu beginnen, bevorzugt zu einem Zeitpunkt zu beginnen, an dem dieser einen vorbestimmten Wert erreicht oder überschritten hat. Idealerweise ist dies ein Zeitpunkt, zu dem der relative Energieverbrauch ein Minimum erreicht hat. In der Praxis wird das genaue Erreichen des Minimums möglicherweise nicht zu erfassen sein, allerdings kann festgestellt werden, wann das Minimum durchlaufen wurde, das heißt der relative Energieverbrauch wieder ansteigt. Das heißt die physikalische Reinigung wird dann vorzugsweise ausgeführt, wenn das Erreichen oder das Passieren des Minimums für den relativen Energieverbrauch erfasst wird. Dies ist der Zeitpunkt, zu dem im Wesentlichen minimale Produktionskosten erreicht werden. Wie beschrieben, wird der relative Energieverbrauch mit steigendem erzeugten Permeat-Volumen nach der physikalischen Reinigung zunächst abnehmen. Er wird jedoch später wieder ansteigen, da das pro Zeiteinheit produzierte Permeat-Volumen mit zunehmender Verschmutzung des Filterelementes abnimmt und gegebenenfalls gleichzeitig aufgrund des höheren Strömungswiderstandes der Energieverbrauch steigt. D. h. durch die erfindungsgemäße Betrachtung des relativen Energieverbrauches kann der optimale Zeitpunkt zum Start eines physikalischen Reinigungsvorganges ermittelt werden.

Es kann entweder direkt der relative Energieverbrauch oder ein von diesem abgeleiteter Kennwert, insbesondere die zeitliche Ableitung des relativen Energieverbrauches oder deren Betrag betrachtet werden, um den Abschaltzeitpunkt für den Produktionszyklus zu bestimmen.

Vorzugsweise wird ein Reinigungsvorgang somit nicht mehr von Druck oder Strömungsverhältnissen im Filtersystem abhängig gemacht, sondern vom Energieverbrauch bzw. von den Produktionskosten, welche ebenfalls eine vom Energieverbrauch abgeleitete Kenngröße darstellen. Dazu wird bevorzugt kontinuierlich eine Analyse des Gesamtenergieverbrauches und des relativen Energieverbrauches pro Netto-Permeat-Volumen durchgeführt. In die Produktionskosten können auch noch weitere Kosten als nur Energiekosten, beispielsweise für Verbrauchsmaterialien etc. einfließen. Im Sinne des "Energieverbrauches" sind die Produktionskosten im Sinne dieser Anmeldung als äquivalent zu verstehen. Die Produktionskosten können insbesondere auch Chemikalienkosten umfassen. Derartige Kosten können in einen äquivalenten Energieverbrauch umgerechnet werden und dann in der Berechnung wie der Energieverbrauch berücksichtigt werden.

Bevorzugt wird die physikalische Reinigung dann begonnen, wenn die zeitliche Ableitung oder deren Betrag des laufend bestimmten relativen Energieverbrauches eine vorbestimmte Steigung erreicht hat, insbesondere null entspricht. D. h. bei dieser Betrachtung wird der relative Energieverbrauch über der Zeit aufgetragen und die Steigung der sich ergebenden Kurve betrachtet. Wie oben erläutert, nimmt im Produktionszyklus nach einer physikalischen Reinigung der relative Energieverbrauch zunächst ab bis er ein Minimum erreicht und danach wieder ansteigt. Idealerweise wird die minimale Steigung bzw. das Minimum des Betrages der Steigung dieser Kurve ermittelt und bildet die vorbestimmte Steigung, zu welcher die physikalische Reinigung begonnen wird. Es ist jedoch auch möglich, von null abweichende Steigungen als vorbestimmte Steigung heranzuziehen, insbesondere Punkte auf der genannten Kurve, welche zeitlich gesehen vor oder hinter dem Minimum liegen. Eine gewisse Verkürzung der Intervalle zwischen zwei physikalischen Reinigungen erhöht zwar die Anzahl der durchzuführenden physikalischen Reinigungen, ermöglicht es jedoch auf der anderen Seite den Abstand zwischen zwei erforderlichen Cleaning-in-Place-Vorgängen zu verlängern, welche nach einer gewissen Zahl von physikalischen Reinigungszyklen mit dazwischenliegenden Produktionszyklen erforderlich wären. Bei den Cleaning-in-Place (CIP) - Vorgängen handelt es sich um eine ortsgebundene Reinigung unter Verwendung von geeigneten Reinigungsmedien.

Das genannte betrachtete Netto-Permeat-Volumen entspricht bevorzugt dem produzierten Permeat-Volumen abzüglich desjenigen Volumens, welches für eine physikalische Reinigung und/oder ein Cleaning-in-Place verwendet wird. Für eine physikalische Reinigung, wie eine Rückspülung, wird ein Teil des erzeugten Permeats benötigt, welches somit dann nicht mehr zur Nutzung zur Verfügung steht. Dabei wird stets ein Filterzyklus bestehend aus einer physikalischen Reinigung mit einem sich anschließenden Produktionszyklus betrachtet und in dem Produktionszyklus das absolute erzeugte Permeat-Volumen aufsummiert und von diesem das bei der vorangehenden Reinigung verwendete Permeat-Volumen abgezogen, sodass idealerweise zu jedem Zeitpunkt das bis zu diesem Zeitpunkt erzeugte Netto-Permeat-Volumen bestimmt werden und der oben genannten Bestimmung des Startpunktes für die nächste erforderliche physikalische Reinigung zugrunde gelegt werden kann. Die zusätzliche oder alternative Berücksichtigung des Permeat-Volumens, welches für ein Cleaning-in-Place benötigt wird, bietet sich insbesondere dann an, wenn auch der Zeitpunkt des Cleaning-in-Place auf Grundlage des relativen Energieverbrauches bestimmt werden soll. Dann würden der Energieverbrauch und das Netto-Permeat-Volumen über mehrere Filterzyklen jeweils bestehend aus einer physikalischen Reinigung und einem sich anschließenden Produktionszyklus betrachtet bzw. aufgezeichnet, so dass stets vorzugsweise eine Aufzeichnung von einem Cleaning-in-Place zum nächsten Cleaning-in-Place erfolgt.

Gemäß einer weiteren bevorzugten Variante wird das Netto-Permeat-Volumen auch als Zielvolumen für das von dem Filtersystem zu produzierende Permeat-Volumen zugrunde gelegt. D. h. es wird gemäß dem erfindungsgemäßen Steuerverfahren vorzugsweise sichergestellt, dass das Filtersystem ein Netto-Permeat-Volumen pro Zeiteinheit produziert, welches einem Zielwert entspricht. Übersteigt das Netto-Permeat-Volumen diesen Zielwert wird die Produktionsmenge, beispielsweise durch Verringerung des Durchflusses einer Förderpumpe verringert, wodurch sich der Energieverbrauch verringern lässt. Umgekehrt kann die Produktionsmenge erhöht werden, wenn das Netto-Permeat-Volumen den Zielwert unterschreitet. Die Produktionsmenge ist dabei das aktuell pro Zeiteinheit produzierte Permeat-Volumen, welches somit vorzugsweise so angepasst wird, dass stets ein gewünschtes Netto-Permeat-Volumen erzeugt wird.

Bevorzugt wird das Aufzeichnen des Gesamtenergieverbrauches und des Netto-Permeat-Volumens vor der Ausführung einer physikalischen Reinigung oder der Ausführung eines Cleaning-in-Place neu bzw. wieder gestartet. Das bedeutet, dass für die Bestimmung des Netto-Permeat-Volumens stets idealerweise nur der aktuelle Filterzyklus bestehend aus der physikalischen Reinigung und dem sich anschließenden Produktionszyklus bis zur nächsten physikalischen Reinigung betrachtet wird. In den Gesamtenergieverbrauch fließt dabei der Energieverbrauch für den Reinigungsvorgang sowie der aufsummierte Energieverbrauch im sich anschließenden Produktionszyklus ein. Entsprechend ist das Netto-Permeat-Volumen das im aktuellen Produktionszyklus produzierte Permeat-Volumen abzüglich desjenigen Permeat-Volumens, welches im vorangehenden physikalischen Reinigungsvorgang verbraucht wurde. Dies bedeutet, dass das Netto-Permeat-Volumen zu Beginn eines Produktionszyklus direkt nach einer physikalischen Reinigung zunächst negativ sein kann bis die Menge von Permeat, welche in der physikalischen Reinigung verbraucht wurde, wieder erzeugt ist. Für den Fall, dass eine globale Betrachtung des relativen Energieverbrauches zur Bestimmung des Zeitpunktes für ein Cleaning-in-Place verwendet wird, wie es nachfolgend beschrieben wird, bietet es sich an, die Aufzeichnung des Gesamtenergieverbrauchs und des Netto-Permeat-Volumens vor der Ausführung eines Cleaning-in-Place neu zu starten. Es ist jedoch gleichzeitig auch zusätzlich möglich, den Gesamtenergieverbrauch und das Netto-Permeat-Volumen für jeden Filterzyklus in der vorgenannten Weise separat zu erfassen, um den Beginn der physikalischen Reinigung in der beschriebenen Weise festzulegen.

Die physikalische Reinigung kann beispielsweise ein Rückspülen und/oder eine Querströmung und/oder ein mechanisches Abkratzen und/oder eine Luftspülung (air scouring) umfassen. Auch andere Reinigungsverfahren, welche nach einer bestimmten Produktionsdauer zur Reinigung des Filterelementes bzw. der Filterelemente erforderlich sind, könnten zum Einsatz kommen. Die physikalische Reinigung stellt dabei bevorzugt eine rein physikalische Reinigung ohne Zusatz von chemischen Reinigungsmedien dar, wie sie üblicherweise bei Cleaning-in-Place zum Einsatz kommen.

Gemäß einer weiteren bevorzugten Variante des Steuerverfahrens wird ein Cleaning-in-Place bzw. ein Cleaning-in-Place-Vorgang gestartet, wenn der Druck über dem Filterelement oder über dem Filtersystem ein vorbestimmtes Maximum erreicht. Wenn der Druck, d. h. der Differenzdruck zwischen Ein- und Ausgangsseite des Filtersystems bzw. insbesondere des Filterelementes ein bestimmtes Maximum erreicht, ist dies ein Zeichen dafür, dass das Filterelement zu einem gewissen Grad zugesetzt bzw. verschmutzt ist, sodass nicht mehr der erforderliche Durchlass gegeben ist. Dies ist der Zeitpunkt zu dem dann ein Cleaning-in-Place gegebenenfalls unter Zusatz geeigneter Chemikalien stattfindet. Nach dem Cleaning-in-Place werden wieder die oben beschriebenen Filterzyklen jeweils bestehend aus einer physikalischen Reinigung und einem sich anschließenden Produktionszyklus bzw. Produktionsschritt durchgeführt, bis ein nächstes Cleaning-in-Place erforderlich ist. Ein Cleaning-in-Place mit den nachfolgenden Filterzyklen bis zu Beginn des nächsten Cleaning-in-Place wird nachfolgend als Cleaning-in-Place-Zyklus bezeichnet. D. h. ein Cleaning-in-Place-Zyklus beinhaltet ein Cleaning-in-Place und mehrere Filterzyklen, wobei die Filterzyklen jeweils aus seiner physikalischen Reinigung und einem nachfolgenden Produktionsschritt bzw. Produktionszyklus bestehen.

Weiter bevorzugt wird der Zeitpunkt für das nächste Cleaning-in-Place durch Extrapolation einer Kurve bestimmt, welche den Druck über dem Filtersystem oder dem Filterelement am Ende des Filterzyklus gegenüber der Anzahl von Filterzyklen definiert. D. h. es wird der Druck bzw. die Druckdifferenz über dem Filtersystem oder Filterelement am Ende eines Filterzyklus, d. h. vor dem Beginn des nächsten mechanischen Reinigungsschrittes erfasst und dieser Druck wird gegenüber der Anzahl von erfolgten Filterzyklen aufgetragen. Dabei wird sich der Druck bzw. die Druckdifferenz, beispielsweise über einer Filtermembran, von Filterzyklus zu Filterzyklus vergrößern, da durch die mechanische Reinigung in jedem Filterzyklus das Filterelement nicht vollständig regeneriert bzw. gereinigt werden kann. Über eine Extrapolation dieser Kurve kann bestimmt werden, wann die Kurve das vorbestimmte Maximum für den Druck bzw. die Druckdifferenz erreichen wird, welche ein nächstes Cleaning-in-Place erfordert. So kann der Zeitpunkt für das bzw. die Anzahl von Filterzyklen bis zum Cleaning-in-Place vorbestimmt bzw. vorausgesagt werden.

Weiter bevorzugt wird die vorbestimmte Steigung bzw. Grenzsteigung für den relativen Energieverbrauch, bei welcher eine physikalische Reinigung begonnen wird, in Abhängigkeit eines geschätzten Energieverbrauches angepasst, welcher auf Basis des Energieverbrauches eine Anzahl von vorangehenden Filterzyklen bestimmt wird. D. h. es wird auf Basis der Energieverbräuche mehrerer vorangehender Filterzyklen der Energieverbrauch für folgende Filterzyklen berechnet bzw. extrapoliert. Auf Grundlage dieses geschätzten erwarteten Energieverbrauches wird die vorbestimmte Steigung, bei welcher eine physikalische Reinigung gestartet wird, angepasst. Dazu kann insbesondere zur Anpassung der vorbestimmten Steigung eine Extrapolation des Energieverbrauches einer Anzahl von Filterzyklen berechnet werden, um den Energieverbrauch eines aktuellen Cleaning-in-Place-Zyklus vorauszubestimmen. Der aktuelle Cleaning-in-Place-Zyklus beinhaltet einen Cleaning-in-Place-Vorgang und eine Anzahl von Filterzyklen welche sich daran anschließen bis zum Beginn des nächsten Cleaning-in-Place bzw. Cleaning-in-Place-Vorgangs. Um den Energieverbrauch des aktuellen Cleaning-in-Place-Zyklus vorauszubestimmen, wird der Energieverbrauch einer Anzahl vergangener Filterzyklen zugrunde gelegt und daraus der Energieverbrauch für die folgenden Filterzyklen durch Extrapolation vorausberechnet. In Kenntnis der Anzahl von Filterzyklen bis zum nächsten Cleaning-in-Place, welche beispielsweise durch Extrapolation der Kurve, welche den Druck gegenüber der Anzahl von Filterzyklen aufzeigt, wie es oben beschrieben ist, bestimmt wird, kann so der Energieverbrauch für den gesamten aktuellen Cleaning-in-Place-Zyklus vorausbestimmt bzw. abgeschätzt werden. Der so vorausbestimmte Energieverbrauch wird mit einem zuvor vorausbestimmten Energieverbrauch für den aktuellen Cleaning-in-Place-Zyklus verglichen. D. h. es erfolgt kontinuierlich eine Vorausbestimmung des Energieverbrauches für den aktuellen bzw. laufenden Cleaning-in-Place-Zyklus und es wird durch Vergleich beobachtet, wie dieser vorausbestimmte Energieverbrauch sich beispielsweise von Filterzyklus zu Filterzyklus ändert.

Wenn der zuvor, d. h. vorangehend vorausbestimmte Energieverbrauch geringer als der aktuell vorausbestimmte Energieverbrauch für den aktuellen bzw. laufenden Cleaning-in-Place-Zyklus ist, wird vorzugsweise die vorbestimmte Steigung vergrößert. D. h. wenn so der abgeschätzte Energieverbrauch bzw. die abgeschätzten Kosten für den laufenden Cleaning-in-Place-Zyklus ansteigen, werden die Filterzyklen durch Vergrößerung der vorbestimmten Steigung verkürzt, sodass die physikalische Reinigung in kürzeren Intervallen stattfindet.

Umgekehrt ist es bevorzugt, dass die vorbestimmte Steigung verringert wird, wenn der zuvor vorausbestimmte Energieverbrauch größer als der aktuell vorausbestimmte Energieverbrauch ist. In diesem Fall verringert sich der vorausbestimmte Energieverbrauch für den gesamten laufenden Cleaning-in-Place-Zyklus von Filterzyklus zu Filterzyklus, sodass durch Verringerung der vorbestimmten Steigung die Filterzyklen verlängert werden, d. h. die Abstände zwischen den einzelnen physikalischen Reinigungen vergrößert werden. Durch diese Anpassung der vorbestimmten Steigung kann somit der Energieverbrauch für den gesamten Cleaning-in-Place-Zyklus minimiert werden. Dabei wird bei der Abschätzung des Energieverbrauches für den aktuellen Cleaning-in-Place-Zyklus vorzugsweise nicht nur der Energieverbrauch für die Filterzyklen, sondern auch der Energieverbrauch für ein Cleaning-in-Place bzw. einen Cleaning-in-Place-Vorgang mitberücksichtigt. Anstatt nur den Energieverbrauch zu berücksichtigen, können anstelle des Energieverbrauches auch die Kosten berücksichtigt werden und es können die aktuellen Kosten aufsummiert und für den Cleaning-in-Place-Zyklus vorausbestimmt werden. In die Kosten können neben dem Energieverbrauch beispielsweise auch die Kosten für Reinigungsmedien, welche beim Cleaning-in-Place benötigt werden einfließen.

Der Zeitpunkt eines Cleaning-in-Place kann auch in alternativer Weise zu dem vorangehend beschriebenen Verfahren bestimmt werden. So kann beispielsweise kontinuierlich ein Gesamtenergieverbrauch aufgezeichnet werden, welcher zumindest dem Energieverbrauch für ein Cleaning-in-Place, dem Energieverbrauch für die erfolgten physikalischen Reinigungen nach dem letzten Cleaning-in-Place und dem Energieverbrauch für die seit dem letzten Cleaning-in-Place erfolgten Produktionszyklen bis zu einem vorbestimmten, insbesondere aktuellen Zeitpunkt entspricht. Entsprechend kann der relative Energieverbrauch dann auf Grundlage dieses Gesamtenergieverbrauchs kontinuierlich bestimmt werden. Dabei wird ein Netto-Permeat-Volumen zugrundegelegt, welches, wie oben dargelegt, dem erzeugten Permeat-Volumen abzüglich des für das letzte Cleaning-in-Place sowie die seit dem erfolgten physikalischen Reinigungen benötigten Permeat-Volumens entspricht. Auf Grundlage eines so erfassten und kontinuierlich aufgezeichneten globalen relativen Energieverbrauches kann ein Cleaning-in-Place dann gestartet werden, wenn dieser relative Energieverbrauch ein Minimum erreicht oder passiert hat. Das heißt die Bestimmung des Zeitpunktes für ein Cleaning-in-Place erfolgt in entsprechender Weise, wie es oben für die Bestimmung des Zeitpunktes einer physikalischen Reinigung anhand eines lokalen, nur einen Produktionszyklus erfassenden relativen Energieverbrauchs beschrieben wurde. Auch für den Beginn eines Cleaning-in-Place wird der Zeitpunkt ausgewählt, an welchem der relative Energieverbrauch im Wesentlichen sein Minimum erreicht hat. Gegebenenfalls kann dieser Zeitpunkt erst nach einem Durchlaufen bzw. Überschreiten des Minimums erkannt werden, so dass nicht ganz exakt der minimale Energieverbrauch getroffen werden kann. Für die Bestimmung des Zeitpunktes eines Cleaning-in-Place in dieser Weise wird somit der globale relative Energieverbrauch über mehrere Produktionszyklen bzw. mehrere physikalische Reinigungen aufgezeichnet bzw. betrachtet.

Bei dieser Betrachtung erfolgt vorzugsweise dann die Bestimmung des Zeitpunktes für eine physikalische Reinigung in der Weise, dass der relative Energieverbrauch, das heißt der globale relative Energieverbrauch kontinuierlich berechnet und als Kurve über der Zeit aufgetragen wird, wobei eine physikalische Reinigung vorzugsweise dann gestartet wird, wenn der Betrag der Steigung dieser Kurve sein Maximum erreicht bzw. passiert hat. Die Steigung der Kurve ist negativ, das heißt der relative Energieverbrauch nimmt mit der Zeit ab, da er sich mit zunehmendem erzeugtem Permeat-Volumen verringert. Allerdings verlangsamt sich die Abnahme des relativen Energieverbrauches mit zunehmender Verschmutzung des Filterelements, da sich dadurch die Menge des aktuell unter konstanten Druckbedingungen erzeugten Permeat-Volumens verringert. Eine physikalische Reinigung beispielsweise ein Rückspülen wird vorzugsweise dann gestartet, wenn die Steigung dieser Kurve abnimmt bzw. der Betrag der Steigung dieser Kurve sich verringert, das heißt sein Maximum überschritten hat. So kann an der Kurve für den globalen relativen Energieverbrauch sowohl der Zeitpunkt für ein Cleaning-in-Place als auch der Zeitpunkt für eine dazwischenliegende bzw. mehrere dazwischenliegende physikalische Reinigungen bestimmt werden.

Gemäß einer weiteren bevorzugten Ausführungsform wird das erfindungsgemäße Steuerverfahren zur Steuerung eines Filtersystems eingesetzt, in welchem eine Querströmung in dem Filtersystem herrscht, d. h. das Filterelement, insbesondere eine Membran, wird auf seiner Eingangsseite von einer Querströmung überströmt. Diese Querströmung wird gemäß dem erfindungsgemäßen Steuerverfahren bevorzugt basierend auf der aktuellen Permeat-Strömung eingestellt, d. h. der Volumenstrom der Querströmung wird an den aktuellen Volumenstrom der Permeat-Strömung angepasst. Bevorzugt wird dabei die Querströmung vergrößert, wenn die Permeat-Strömung durch das Filterelement geringer als ein vorbestimmter Grenzwert ist und die Querströmung wird verringert, wenn die Permeat-Strömung oberhalb eines vorbestimmten Grenzwertes liegt. Auch dies trägt zur Minimierung des Energieverbrauches in dem Filtersystem bei, da die Energie zur Erzeugung der Querströmung minimiert werden kann. Während durch Veränderung der Querströmung bei konstanten Druckverhältnissen die Permeat-Strömung beeinflusst werden kann, ist es auch möglich, durch Veränderung der Querströmung Verschmutzungs- bzw. Fouling-Raten zu beeinflussen und somit den Energieverbrauch des Systems über der Zeit zu beeinflussen. Durch Veränderung des Energieverbrauches kann die Steigung der Kurve des Energieverbrauches und somit deren Minimum beeinflusst werden, zu deren Zeitpunkt eine physikalische Reinigung und/oder ein Cleaning-in-Place durchgeführt werden.

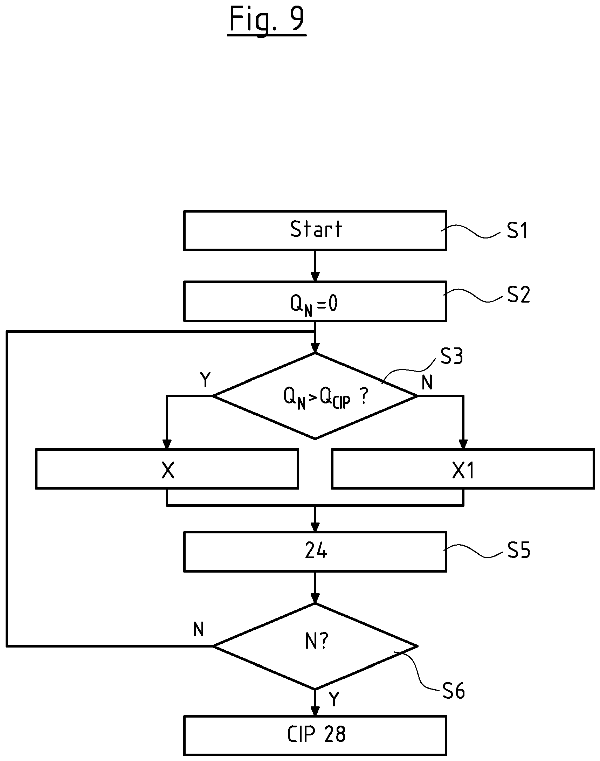

Mit einer stärkeren Querströmung werden die Filterzyklen länger und es wird daher mehr Permeat produziert, jedoch bei höherem Energieverbrauch aufgrund der höheren Querströmung. Das bedeutet, dass bei stärkerer Querströmung die physikalische Reinigung bzw. ein Rückspülen in einem Zyklus später erforderlich ist als bei einer geringeren Querströmung. D.h. ein Minimum des relativen Energieverbrauchs, wie es vorangehend beschrieben wurde, wird zu einem späteren Zeitpunkt erreicht, so dass die Produktionsdauer verlängert wird. Die Simulation der relativen Energieverbrauchskurve über der Zeit für einige verschiedene Querströmungseinstellungen erlaubt es, diejenige Querströmungseinstellung, d. h. diejenige Querströmung auszuwählen, welche den energieeffizientesten Betrieb ermöglicht, d. h. mit dem niedrigsten Minimum der Kurve für den relativen Energieverbrauch. Dasselbe Konzept kann nicht nur für die Bestimmung des Zeitpunktes für ein Rückspülen sondern auch unter Berücksichtigung des globalen relativen Energieverbrauches verwendet werden, wie vorangehend und unten anhand der Fig. 9 - 11 beschrieben. D. h. hier kann die Kurve für den globalen relativen Energieverbrauch für einen ganzen Cleaning-in-Place-Zyklus für verschiedene Querströmungseinstellungen simuliert werden, um die optimale Querströmungseinstellung zu finden, welche das niedrigste Minimum des globalen relativen Energieverbrauches ermöglicht.

Gemäß einer weiteren bevorzugten Ausführungsform ist es möglich, eine Kurve für den relativen Energieverbrauch über der Zeit für verschiedene Querströmungen, d. h. verschieden starke Querströmungen zu simulieren. Es kann dann derjenige Wert für die Querströmung ausgewählt werden, bei welchem die Kurve für den minimalen Energieverbrauch ihr niedrigstes Minimum aufweist. Dies kann sowohl für den lokalen relativen Energieverbrauch zwischen zwei physikalischen Reinigungen als auch für den globalen relativen Energieverbrauch zwischen zwei Cleaning-in-Place-Vorgängen geschehen.

Nachfolgend wird die Erfindung beispielhaft anhand der beigefügten Figuren beschrieben:

Fig. 1a      ein erstes Beispiel für ein Filtersystem,

Fig. 1b      ein zweites Beispiel für ein Filtersystem unter Verwendung einer Querströmung,

Fig. 2      ein Diagramm, welches den Differenzdruck über dem Filtersystem über der Zeit aufgetragen zeigt,

Fig. 3      den relativen Energieverbrauch eines Filterzyklus über der Zeit aufgetragen,

Fig. 4      ein Ablaufdiagramm, welches die Bestimmung der Dauer eines Filterzyklus zeigt,

Fig. 5      den Differenzdruck über dem Filtersystem gegenüber der Zahl der Filterzyklen aufgetragen,

Fig. 6      ein Ablaufdiagramm, welches die Anpassung eines Grenzsteigung für den relativen Energieverbrauch zeigt,

Fig. 7      ein Ablaufdiagramm, welches die Anpassung einer Querströmung zeigt,

Fig. 8      ein Ablaufdiagramm, welches die Bestimmung der Länge eines Reinigungsvorganges darstellt,

Fig. 9      ein Ablaufdiagramm für ein alternatives Verfahren zum Bestimmen der Zeitpunkte für eine physikalische Reinigung und ein Cleaning-in-Place,

Fig. 10      ein Detail des Ablaufes im Schritt X in Figur 9,

Fig. 11      ein Detail des Ablaufes im Schritt XI in Figur 9,

Fig. 12      zwei mögliche Kurven für den globalen relativen Energieverbrauch und

Fig. 13      den Ausschnitt XIII aus den Kurven in Fig. 12.

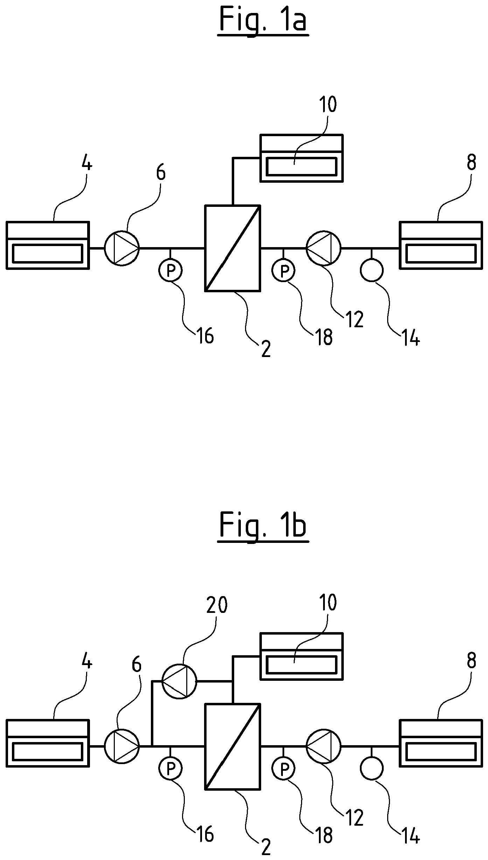

In Fig. 1a ist schematisch ein erstes Filtersystem gezeigt, in welchem das erfindungsgemäße Steuerverfahren zum Einsatz kommen kann. Das Filtersystem weist als zentrales Element ein Filterelement 2 auf. Dieses kann beispielsweise eine Membran oder eine Anordnung mehrerer Membranen sein. Es kann jedoch auch ein anderes geeignetes Filterelement oder es können andere geeignete Filterelemente zum Einsatz kommen. Dem Filterelement 2 wird aus einer Speisung 4, beispielsweise einem Brunnen, über eine Zufuhrpumpe 6 zu filterndes Medium, beispielsweise verunreinigtes Wasser zugeführt. Das gefilterte Medium bzw. Wasser fließt ausgangsseitig des Filterelementes 2 in einen Sammelbehälter 8. Das anfallende Konzentrat 10, welches das Filterelement 2 nicht passiert, wird gesammelt oder auf andere geeignete Weise abgeführt. An der Ausgangsseite des Filterelementes 2 ist im Strömungsweg zu dem Sammelbehälter 8 darüber hinaus eine Rückspülpumpe 12 angeordnet, über welche gefiltertes Medium, d. h. Permeat, aus dem Sammelbehälter 8 zurück zum Filterelement 2 und entgegen der Filterrichtung durch dieses gepumpt werden kann, um das Filterelement 2 rückzuspülen. Das dabei an der Eingangsseite des Filterelementes 2 austretende Medium wird mit dem Konzentrat 10 abgeführt. In der Anordnung ist darüber hinaus ein Strömungssensor 14 im Strömungsweg von dem Filterelement 2 zu dem Sammelbehälter 8 angeordnet, welcher den Permeat-Durchfluss bzw. in umgekehrter Richtung den Rückspül-Durchfluss erfasst. Darüber hinaus ist eingangsseitig des Filterelementes 2 ein erster Drucksensor 16 und ausgangsseitig des Filterelementes ein zweiter Drucksensor 18 angeordnet, über welchen der Differenzdruck-P über dem Filterelement 2, d. h. der Transfilter bzw. Transmembrandruck TMP bestimmt werden kann.

Bei der Ausgestaltung gemäß Fig. 1b handelt es sich um ein Filtersystem mit Querströmung. In diesem Filtersystem ist zusätzlich zu der anhand von Fig. 1a beschriebenen Ausgestaltung eine Querströmungspumpe 20 angeordnet, welche das zu filternde Medium über die Eingangsseite des Filterelementes 2 zirkuliert, d. h. eine Querströmung über dem Filterelement erzeugt, welche bewirkt, dass das Filterelement langsamer verunreinigt.

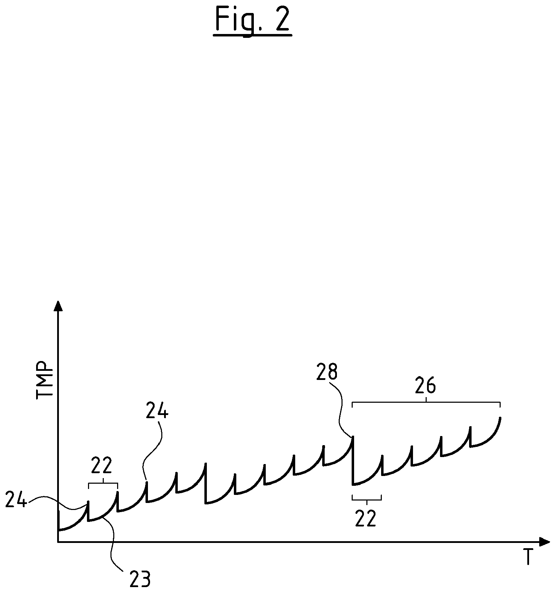

Fig. 2 zeigt schematisch den Betrieb des Filterelementes 2, wobei der Druck bzw. die Druckdifferenz TMP über dem Filterelement 2 gegenüber der Zeit T aufgetragen ist. Es ist zu erkennen, dass viele Filterzyklen 22 aufeinander folgen, wobei jeder Filterzyklus 22 anfänglich aus einer physikalischen Reinigung 24 und einer anschließenden Produktionsphase bzw. einem anschließenden Produktionszyklus 23 besteht, in welchem der eigentliche Filtrationsvorgang durchgeführt wird. Im Anschluss an den Produktionszyklus 23 erfolgt wieder eine physikalische Reinigung 24, womit der nächste Filterzyklus 22 beginnt. Es ist zu erkennen, dass der Differenzdruck TMP über dem Filterelement 2 während des Produktionszyklus 23 ansteigt und mit der physikalischen Reinigung 24, welche insbesondere ein Rückspülen mit Hilfe der oben beschriebenen Rückspülpumpe 12 ist, wieder verringert werden kann, wobei allerdings der Ausgangszustand nicht wieder hergestellt werden kann. Nach einer bestimmten Anzahl von derartigen Filterzyklen 22 erfolgt ein Cleaning-in-Place (ortsgebundene Reinigung) 28 unter Verwendung von Reinigungsmitteln bzw. Chemikalien, wodurch der Differenzdruck über dem Filterelement 2 um ein größeres Maß reduziert werden kann. Anschließend erfolgen wieder mehrere Filterzyklen 22 bis ein erneutes Cleaning-in-Place 28 erforderlich ist. Ein Cleaning-in-Place-Zyklus 26 umfasst somit ein Cleaning-in-Place 28 und eine darauffolgende Anzahl von Filterzyklen 22 bis zum Beginn des Cleaning-in-Place-Vorganges 28.

Während in bekannten System der Betrieb des Filtersystems hauptsächlich über die Änderungen des Differenzdruckes TMP über dem Filtersystem bzw. Filterelement 2 gesteuert wird, ist es erfindungsgemäß vorgesehen, das Steuerverfahren so auszulegen, dass das System energie- bzw. kostenoptimiert betrieben wird. Dazu ist zunächst vorgesehen, das Filtersystem so zu steuern, dass ein gewünschter Netto-Permeat-Strom $Q_N$ erzeugt wird. D. h. es wird die erzeugte Permeat-Menge abzgl. der Permeat-Menge, welche für die Reinigung bzw. Rückspülung benötigt wird, betrachtet und auf einem gewünschten Sollwert gehalten. Dadurch wird verhindert, dass zu viel Permeat produziert wird, was zu unnötigen Energiekosten und Reinigungskosten führen würde.

Darüber hinaus ist erfindungsgemäß vorgesehen, während des Filterzyklus 22 kontinuierlich den Gesamtenergieverbrauch $E_G$ des Filtersystems und damit die Gesamtkosten zu erfassen. Der Gesamtenergieverbrauch $E_G$ ist in der Regel der elektrische Energieverbrauch des Gesamtsystems, welcher in erster Linie durch den Energieverbrauch der Pumpen 6 und 12 bzw. gegebenenfalls der Querströmungspumpe 20 bestimmt wird. Es wird der Gesamtenergieverbrauch $E_G$ aus dem Energieverbrauch $E_P$ für den Produktionszyklus sowie dem Energieverbrauch $E_B$ für den Rückspülvorgang aufsummiert. Dabei wird stets ein Filterzyklus 22 beginnend mit dem Rückspülvorgang, welcher eine physikalische Reinigung 24 darstellt, betrachtet. Aus diesem Gesamtenergieverbrauch $E_G$ wird der relative Energieverbrauch

$E_{rel}$ bestimmt, indem der Gesamtenergieverbrauch $E_G$ auf das erzeugte Netto-Permeat-Volumen $Q_N$ bezogen wird. Dabei ist das Netto-Permeat-Volumen $Q_N$ das erzeugte Permeat-Volumen $Q_P$ abzüglich dem für den Rückspülvorgang benötigten Rückspülvolumen $Q_B$.

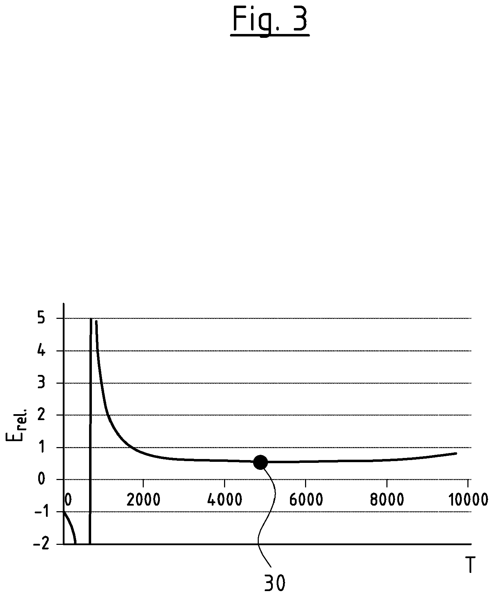

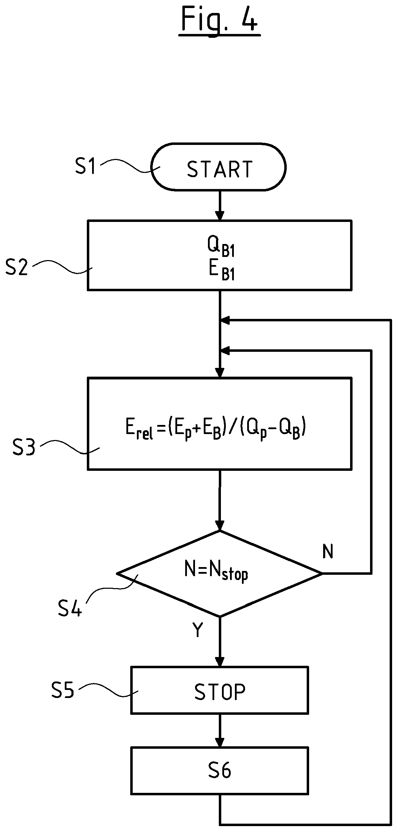

Die Filtration läuft dabei wie in Fig. 4 dargestellt ab. Beginnend im Schritt S1 wird im Schritt S2 zunächst für den ersten Filterzyklus 22, zu dessen Beginn keine physikalische Reinigung 24 stattfindet, ein geschätztes Rückspülvolumen $Q_{B1}$ und ein geschätzter Rückspülenergieverbrauch $E_{B1}$ festgesetzt. Unter Zugrundelegung dieser Werte wird dann im Schritt S3 während des Produktionszyklus 23 kontinuierlich der Produktionsenergieverbrauch $E_P$ erfasst und aufsummiert. Gleichzeitig wird das erzeugte Permeat-Volumen $Q_P$ kontinuierlich erfasst und aufsummiert. Unter Zugrundelegung der zuvor festgesetzten Werte für den Rückspülenergieverbrauch $E_B$ (für den ersten Zyklus $E_{B1}$) und dem Rückspülvolumen $Q_B$ (für den ersten Zyklus $Q_{B1}$) wird so kontinuierlich der aktuelle relative Energieverbrauch $E_{rel}$ bestimmt. Fig. 3 zeigt die Kurve des relativen Energieverbrauches $E_{rel}$, aufgetragen über der Zeit T. Es ist zu erkennen, dass dieser zunächst am Anfang negativ ist und dann gegen unendlich tendiert, da zum Anfang kein produziertes Permeat-Volumen $Q_P$, sondern nur verbrauchtes Rückspülvolumen $Q_B$ vorhanden ist. Sobald so viel Permeat-Volumen $Q_P$ produziert worden ist, dass das verbrauchte Rückspülvolumen $Q_B$ wieder aufgefüllt ist, nimmt der relative Energieverbrauch $E_{rel}$ über die Zeit ab, bis er ein Minimum 30 erreicht. Bei dem Minimum 30 ist die Steigung der Kurve gleich null.

Über den Schritt S4 in Fig. 4 wird während des Produktionszyklus 23 kontinuierlich die Steigung N, d. h. die Ableitung des relativen Energieverbrauches $E_{rel}$, überwacht und geprüft, ob die Steigung eine Grenzsteigung $N_{STOP}$ erreicht hat. Solange die Grenzsteigung $N_{STOP}$ nicht erreicht ist, wird der Produktionszyklus 23 fortgesetzt. Ist die Grenzsteigung $N_{STOP}$ erreicht, wird im Schritt S5 der Produktionszyklus 23 gestoppt und eine physikalische Reinigung 24, d. h. ein Rückspülen durchgeführt. Im Schritt S6 wird der für die physikalische Reinigung 24 benötigte Energieverbrauch $E_B$ und das benötigte Rückspülvolumen $Q_B$ erfasst und dann im Schritt S3 bei der Berechnung des relativen Energieverbrauches $E_{rel}$ für den nächsten Filterzyklus 22 zugrunde gelegt. In dem Beispiel gemäß Fig. 3 wird der Produktionszyklus 23 bei Erreichen einer Grenzsteigung $N_{STOP} = 0$, d. h. bei Erreichen des Minimums 30 gestoppt. Dadurch wird erreicht, dass der Produktionszyklus 23 so beendet wird, dass die Intervalle zwischen den physikalischen Reinigungen 24 so gewählt sind, dass eine Produktion im Produktionszyklus 22 zum minimalen Energieverbrauch bzw. Kostenaufwand unter Berücksichtigung der erforderlichen physikalischen Reinigung 24 durchgeführt werden kann. Nicht berücksichtigt ist dabei jedoch, dass in bestimmten Intervallen ein Cleaning-in-Place (CIP) 28 erforderlich ist. Dieses benötigt ebenfalls Energie und verursacht Kosten. Insofern kann es wünschenswert sein, einen höheren Energieverbrauch in den einzelnen Filterzyklen 22 zu tolerieren, wenn dadurch der CIP-Zyklus 26 ausgedehnt werden kann und so die Zahl der erforderlichen Cleaning-in-Place-Vorgänge 28 reduziert werden kann. Dies geschieht in der Weise, dass die Grenzsteigung $N_{STOP}$ unter Berücksichtigung des Energieverbrauches bzw. der Kosten für einen CIP-Zyklus 28 angepasst wird, d. h. gegenüber dem Minimum 30 um einen gewissen Bereich verschoben wird.

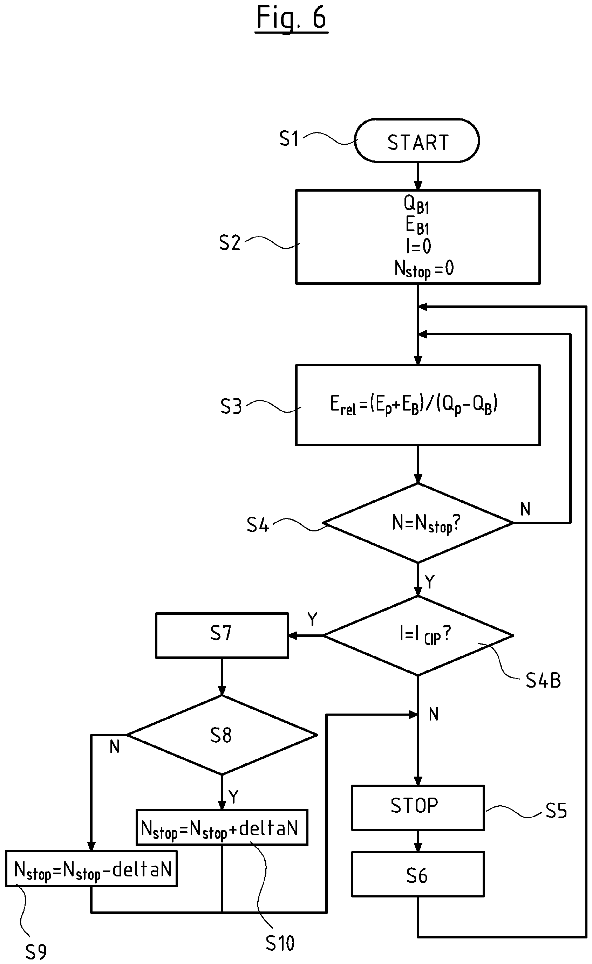

Fig. 6 zeigt den entsprechenden Verfahrensablauf. Im Schritt S1 wird die Filtration gestartet, wobei dann zunächst im Schritt S2 für den ersten Zyklus, wie oben beschrieben, ein geschätzter Energieverbrauch $E_{B1}$ für die erste physikalische Reinigung und ein geschätztes Rückspülvolumen $Q_{B1}$ für die erste physikalische Reinigung festgelegt werden. Darüber hinaus wird der Zähler I für die Anzahl der Filterzyklen 22 auf 0 gesetzt und die Grenzsteigung $N_{STOP}$ zunächst auf 0 gesetzt. Im Schritt S3 erfolgt dann die kontinuierliche Erfassung bzw. Aufsummierung des relativen Energieverbrauches $E_{rel}$, wobei für den ersten Filterzyklus 22 das Rückspülvolumen $Q_{B1}$ und der Rückspülenergieverbrauch $E_{B1}$ zugrunde gelegt werden. Für nachfolgende Filterzyklen 22 werden dann jeweils das Rückspülvolumen $Q_B$ und der Rückspülenergieverbrauch $E_B$ des vorangehenden Rückspülvorganges bzw. der vorangehenden physikalischen Reinigung 24 zugrunde gelegt. Im Schritt S4 erfolgt, wie anhand von Fig. 4 beschrieben, die Berechnung der Steigung N der Kurve des relativen Energieverbrauches über der Zeit T und der Vergleich mit der Grenzsteigung $N_{STOP}$. Solange diese nicht erreicht ist, wird der Produktionszyklus 23 fortgesetzt. Die Schritte S5 und S6 laufen ab wie anhand von Fig. 4 beschrieben. Allerdings ist zwischen den Schritten S4 und S5 noch ein Schritt S4B eingefügt, in welchem der Zähler I für die Anzahl der Filterzyklen 22 mit einem Vorgabewert $I_{CIP}$ verglichen wird. Der Vorgabewert $I_{CIP}$ gibt eine vorgegebene Zahl von Zyklen (z. B. 10, 20, 30 etc.) an, nach welcher eine Abschätzung der Kosten bzw. des Energieverbrauches für den gesamten CIP-Zyklus 26 begonnen wird. Solange dieser Vorgabewert $I_{CIP}$ nicht erreicht wird, läuft das Verfahren mit den Schritten S5 und S6 weiter, wie anhand von Fig. 4 erläutert. Ist der Vorgabewert $I_{CIP}$ erreicht, wird im Schritt S7, basierend auf dem über mehrere Filterzyklen 22 aufsummierten relativen Energieverbrauch $E_{rel}$ der relative Gesamtenergieverbrauch für den gesamten CIP-Zyklus vorausberechnet. Dabei wird auch der Energieverbrauch bzw. werden die Kosten für einen vorangehenden Cleaning-in-Place-Vorgang 28 berücksichtigt. Hat noch kein vorangehender CIP-Vorgang 28 stattgefunden, werden hier zunächst geschätzte Kosten angesetzt.

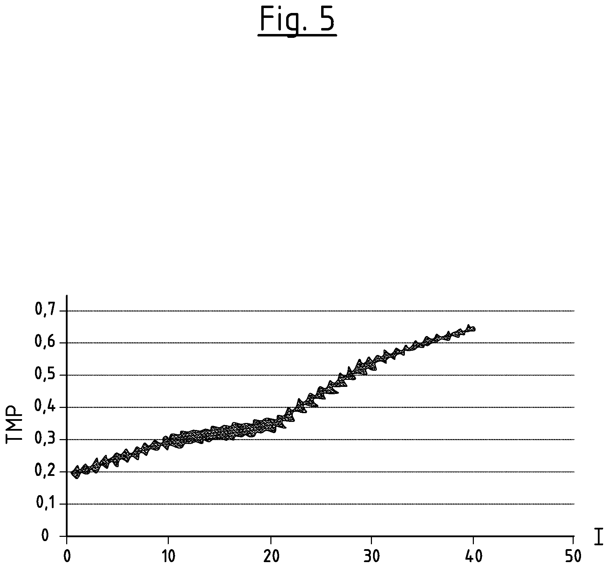

Um die Zahl der noch folgenden Filterzyklen 22 bis zum nächsten CIP 28 abschätzen zu können, wird eine Extrapolation aus der Kurve, welche in Fig. 5 dargestellt ist, vorgenommen. Dort ist der Differenzdruck TMP über dem Filterelement 2 bzw. über dem gesamten Filtersystem gegenüber der Anzahl der Zyklen I aufgetragen. Ein CIP 28 wird gestartet, wenn dieser Differenzdruck TMP einen vorgegebenen Grenzwert erreicht. Die Steigung der Kurve über die Filterzyklen I wird extrapoliert bis zu diesem Grenzwert, sodass die Zahl der bis dahin noch folgenden Filterzyklen abgeschätzt wird. Für diese wird der Energieverbrauch im Schritt S7 aufsummiert abgeschätzt. Im Schritt S8 wird verglichen, ob der so abgeschätzt Energieverbrauch größer oder kleiner ist als der im vorangehenden Filterzyklus 22 abgeschätzte Energieverbrauch. Anstatt des Energieverbrauches können hier auch die Kosten betrachtet werden, in welchen zum Beispiel auch die Kosten für erforderliche Reinigungsmittel im Cleaning-in-Place-Vorgang Berücksichtigung finden können. Ist der aktuell abgeschätzte Energieverbrauch bzw. sind die aktuell abgeschätzten Kosten für den gesamten CIP-Zyklus kleiner als der Energieverbrauch bzw. die Kosten, welche im vorangehenden Filterzyklus 22 abgeschätzt wurden, wird im Schritt S9 die Grenzsteigung $N_{STOP}$ um einen Wert deltaN reduziert. Im Anschluss folgt dann der oben beschriebene Schritt S5. Ist der abgeschätzte Energieverbrauch bzw. sind die abgeschätzten Kosten nicht kleiner als der im vorangehenden Filterzyklus 22 abgeschätzte Energieverbrauch bzw. die dort abgeschätzten Kosten, folgt der Schritt S10 und die Grenzsteigung $N_{STOP}$ wird um den vorgegebenen Wert deltaN erhöht. So erfolgt eine Anpassung der Grenzsteigung $N_{STOP}$ und gegebenenfalls eine Verschiebung des Punktes, an welchem eine physikalische Reinigung 24 gestartet wird, gegenüber dem in Fig. 3 gezeigten Minimum 30. So kann der Punkt auf der in Fig. 3 gezeigten Kurve nach links oder nach rechts verschoben werden. So wird die Länge der Filterzyklen 22 derart optimiert, dass insgesamt der Energieverbrauch bzw. die Kosten für den gesamten CIP-Zyklus 26 minimiert werden können.

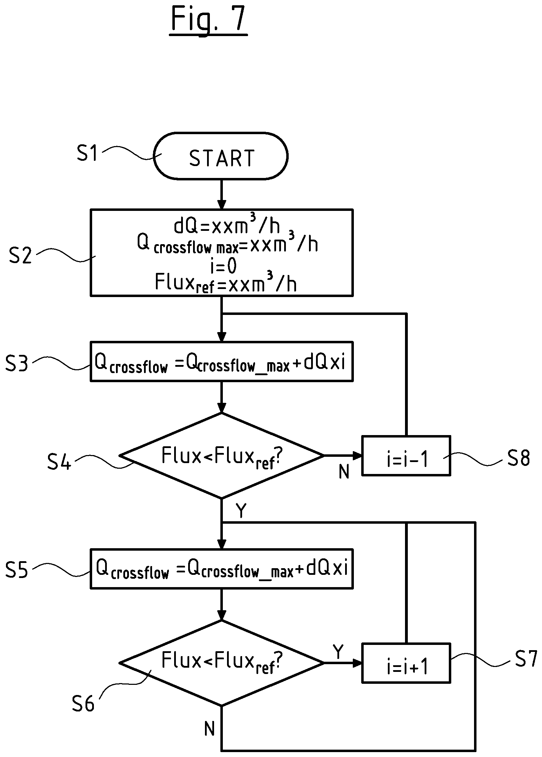

Wird die Filtration während eines Filterzyklus mit einer Querströmung durchgeführt, so ist es gemäß einer besonderen Ausführungsform der Erfindung vorgesehen, diese Querströmung ebenfalls zu optimieren. Dies kann gemäß einer ersten Verfahrensvariante so geschehen, wie es in Figur 7 gezeigt ist. Nach dem Start des Steuerungsprozesses im Schritt S1 werden im Schritt S2 zunächst vorbestimmte Ausgangswerte festgesetzt. So wird ein Änderungswert dQ für die Querströmung als vorbestimmter Wert festgesetzt. Ferner wird ein Sollwert für die Querströmung $Q_{crossflowmax}$ festgesetzt. Ein Zähler i wird auf null gesetzt und darüber hinaus wird ein Durchfluss $Flux_{ref}$ als Solldurchfluss für das erzeugte Permeat festgesetzt. Im nächsten Schritt S3 wird die eingestellte Querströmung $Q_{crossflow}$ zunächst auf den im Schritt S2 festgesetzten Sollwert $Q_{crossflowmax}$ festgesetzt. Da der Zähler i gleich null ist, erfolgt keine Erhöhung oder Verringerung des Wertes zu diesem Zeitpunkt. Im Schritt S4 in Figur 7 wird dann geprüft, ob der aktuelle Permeat-Durchfluss Flux kleiner als der Solldurchfluss $Flux_{ref}$ ist. Ist dies der Fall, folgt zunächst der Schritt S5, in welchem, da der Zähler i weiter gleich null ist, keine Veränderung der Querströmung $Q_{crossflow}$ stattfindet. Im Schritt S6 erfolgt erneut eine Prüfung, ob der Permeat-Durchfluss Flux kleiner als der zuvor festgesetzte Solldurchfluss $Flux_{ref}$ ist. Ist dies weiterhin der Fall, erfolgt im Schritt S7 eine Erhöhung des Zählers i um den Wert eins und anschließend erfolgt im Schritt S5 somit eine Erhöhung der Querströmung $Q_{crossflowmax}$ um den Wert $i \cdot dQ$. Im Anschluss erfolgt erneut der Schritt S6. Ergibt die Abfrage im Schritt S6, dass der Permeat-Durchfluss gleich oder größer als der Solldurchfluss $Flux_{ref}$ ist, erfolgt keine weitere Erhöhung des Zählers i und die Querströmung $Q_{crossflow}$ bleibt konstant. Ergibt die Abfrage im Schritt S4 dass der Permeat-Durchfluss Flux gleich oder größer dem Solldurchfluss $Flux_{ref}$ ist, folgt der Schritt S8, in welchem der Zähler i um den Wert eins reduziert wird. Auf den Schritt S8 folgt dann erneut der Schritt S3, in welchem dann mit einem von null abweichenden Zähler i die Querströmung $Q_{crossflowmax}$ um den Veränderungswert dQ multipliziert mit dem Zähler i verringert wird, da der Zähler i dann negativ ist. Dies erfolgt so lange, bis der gewünschte Permeat-Durchfluss erreicht ist. Auf diese Weise kann ein gewünschter Permeat-Durchfluss $Flux_{ref}$ mit minimaler Querströmung erreicht werden.

Eine weitere Alternative der Optimierung der Querströmung ist die Kurve des lokalen relativen Energieverbrauches für den laufenden Produktionszyklus, wie vorangehend beschrieben, über der Zeit aufzutragen. Es können so verschiedene relative Energieverbräuche für verschiedene Querströmungen in einem Simulationsprozess simuliert werden und es kann dann diejenige Querströmung ausgewählt werden, bei welcher die simulierte Kurve für den relativen Energieverbrauch das niedrigste Minimum erreicht. In dem relativen Energieverbrauch wird über den gesamten Energieverbrauch auch der Energieverbrauch zum Erzeugen der Querströmung berücksichtigt.

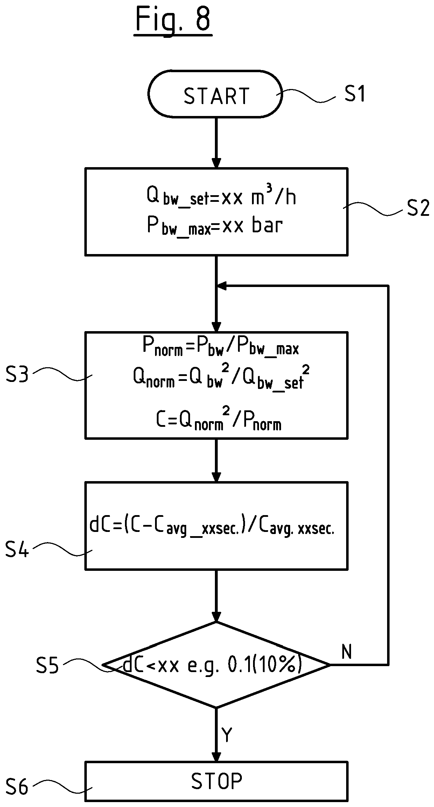

Schließlich ist es erfindungsgemäß auch bevorzugt, die einzelnen Rückspülvorgänge bzw. physikalischen Reinigungsvorgänge 24 hinsichtlich ihrer Dauer zu optimieren. Dazu ist vorgesehen, einen Systemparameter während des Rückspülvorganges kontinuierlich zu überwachen und den Rückspülvorgang 24 dann zu beenden, wenn dieser Systemparameter im Wesentlichen konstant bzw. stabil wird. Als Systemparameter wird dabei ein Wert betrachtet, welcher den hydraulischen Widerstand des Systems repräsentiert. D. h. die physikalische Reinigung 24 wird so lange durchgeführt, dass dieser hydraulische Widerstand einen stabilen Wert annimmt, bzw. sich einem stabilen Wert nähert. Dieses Verfahren ist in Fig. 8 schematisch dargestellt. Der Rückspülvorgang bzw. die physikalische Reinigung 24 beginnt im Schritt S1. Im Schritt S2 werden ein Sollwert $Q_{bw\_set}$ und ein Maximalwert $P_{bw\,max}$ für den Druck während des Rückspülvorganges festgesetzt. Der Durchfluss entspricht dabei dem Durchfluss an dem Strömungssensor 14, d. h. in Spülrichtung durch das Filterelement 2. Der Druck $P_{bw}$ entspricht dem Druck zwischen den Drucksensoren 16 und 18 während der physikalischen Reinigung, d. h. den Transmembrandruck TMP.

Im Schritt S3 werden während der physikalischen Reinigung kontinuierlich der tatsächlich Druck $P_{bw}$ sowie der tatsächliche Durchfluss $Q_{bw}$ erfasst. Dabei werden kontinuierlich normierte Werte $P_{norm}$ und Qnorm durch Division des erfassten Druckes $P_{bw}$ durch den Maximaldruck $P_{bwmax}$ sowie durch Division des Quadrats des erfassten Durchflusses $Q_{bw}$ durch das Quadrat des Sollwertes für den Durchfluss $Q_{bw\_set}$ bestimmt. Daraus wird kontinuierlich ein Kennwert C für den hydraulischen Wiederstand $C=Q_{norm}^2/P_{norm}$ gebildet. Im Schritt S4 wird die Veränderung dC dieses Kennwertes C gemäß der in Fig. 8 in Schritt S4 gezeigten Formel bestimmt, indem die Differenz aus dem Kennwert C und dem laufenden Durchschnitt $C_{avg}$ gebildet wird und diese Differenz auf den laufenden Durchschnitt $C_{avg}$ bezogen wird. Solange diese Abweichung dC größer als ein vorbestimmter Wert ist, wird die physikalische Reinigung 24 fortgesetzt. Wenn die Abweichung dC den Grenzwert erreicht oder unterschreitet, ist das ein Zeichen dafür, dass der Kennwert C, welcher den hydraulischen Widerstand des Systems repräsentiert, stabil ist. In diesem Fall wird im Schritt S6 der Reinigungsvorgang 24 gestoppt.

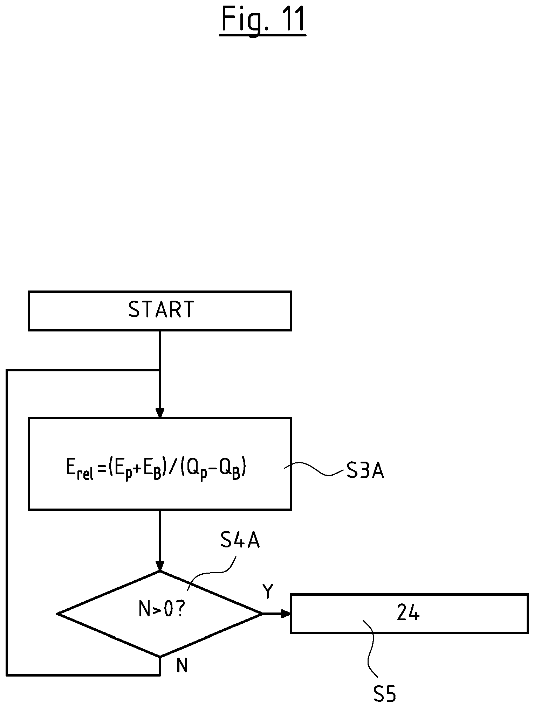

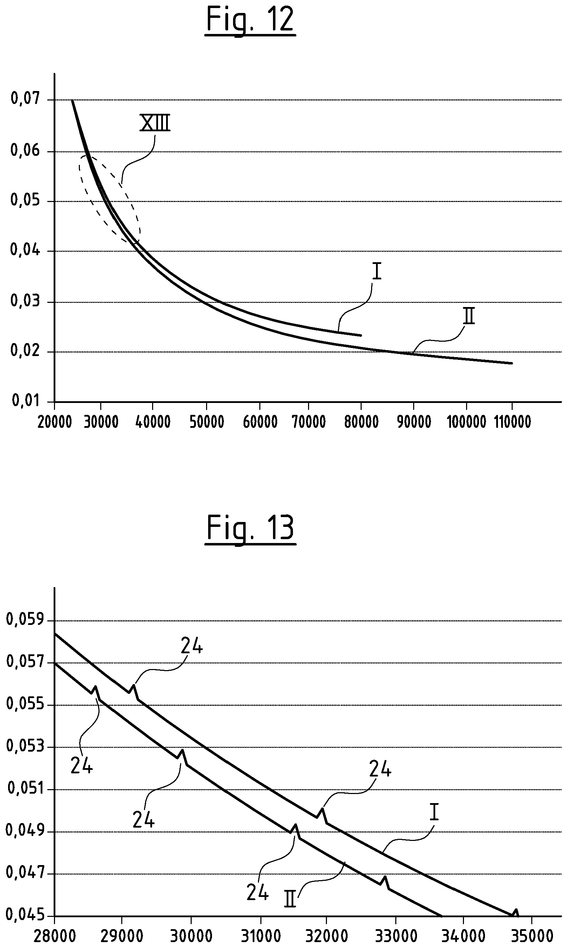

Anhand der Figuren 9 - 11 wird ein alternativer Verfahrensablauf zum Bestimmen des Zeitpunktes für eine physikalische Reinigung 24 oder eine CIP-Vorgang bzw. ein Cleaning-in-Place 28 beschrieben. So kann beides allein auf Grundlage der Betrachtung des globalen relativen Energieverbrauchs $E_{rel}$ bzw. der Kurve des globalen relativen Energieverbrauchs $E_{rel}$ zwischen zwei CIP-Vorgängen geschehen. Fig. 12 zeigt zwei mögliche Kurven des globalen relativen Energieverbrauches, aufgetragen über der Zeit. Fig. 13 zeigt vergrößert einen Ausschnitt XIII der Kurven in Fig. 12. Die Kurve des globalen relativen Energieverbrauchs entspricht im Wesentlichen der in Fig. 3 gezeigten Kurve für den lokalen relativen Energieverbrauch, ist nur über einen entsprechend längeren Zeitraum über mehrere physikalische Reinigungen hinweg aufgetragen. Ferner verläuft die Kurve für den globalen relativen Energieverbrauch nicht glatt, sondern weist, wie in Fig. 12 und Fig. 13 gezeigt, Ausschläge bzw. Zacken auf, welche die physikalischen Reinigungsvorgänge kennzeichnen, welche zu einer kurzzeitigen Erhöhung des relativen Energieverbrauchs führen. Nach einem erfolgten CIP-Vorgang 28 wird im Schritt S1 in Figur 9 das Verfahren gestartet. Zu Beginn ist zunächst das Netto-Permeat-Volumen $Q_N=0$. Gleichzeitig entspricht der Gesamtenergieverbrauch $E_G$ bis zu diesem Zeitpunkt dem Energieverbrauch für den vorangehenden CIP-Vorgang. Im Schritt S3 wird zunächst überprüft, ob das erzeugte Netto-Permeat-Volumen $Q_N$ größer ist als das CIP-Volumen $Q_{CIP}$, das heißt das Permeat-Volumen, welches im vorangehenden CIP-Vorgang 28 verbraucht wurde. So lange das Netto-Permeat-Volumen $Q_N$ kleiner als das zuvor verbrauchte CIP-Volumen $Q_{CIP}$ ist, erfolgt die Bestimmung des Zeitpunktes für eine physikalische Reinigung 24 entweder wie vorangehend anhand von Fig. 4 beschrieben oder schematisch in Fig. 11 dargestellt. Das in Fig. 11 gezeigte Verfahren entspricht dem Schritt S3A oder dem Schritt S3 in Fig. 4. Dort wird der lokale relative Energieverbrauch, d.h. für den laufenden Produktionszyklus, laufend erfasst. Im Schritt S4A wird im Unterschied zu Fig. 4 nicht geprüft, ob eine Grenzsteigung $N_{STOP}$ erreicht ist, sondern ob die Steigung $N_N$ größer null ist. Das heißt hier ist $N_{stop} = 0$. Wenn die Steigung 0 erreicht wird, wird im Schritt S5 (auch Schritt S5 in Fig. 9) eine physikalische Reinigung 24 durchgeführt. Solange die Grenzsteigung $N_{STOP} = 0$ nicht erreicht ist, wird der Filterzyklus 22 fortgesetzt.

Nach erfolgter physikalischer Reinigung 24 im Schritt S5 schließt sich in Fig. 9 der Schritt S6 an, in welchem geprüft wird, ob die Steigung N des globalen relativen Energieverbrauches ihr Vorzeichen geändert hat. Bei dem hier zugrunde gelegten globalen relativen Energieverbrauch $E_{rel}$ wird der Gesamtenergieverbrauch seit dem letzten CIP-Vorgang 28 einschließlich des Energieverbrauches für diesen CIP-Vorgang 28 und die nachfolgenden physikalischen Reinigungen sowie die nachfolgenden Produktionszyklen zugrundegelegt. Auch wird das gesamte Netto-Permeat-Volumen $Q_N$ für diesen Zeitraum seit dem letzten CIP-Vorgang 28 zugrundegelegt. Im Unterschied dazu wird dem Schritt XI, welcher anhand von Fig. 4 und Fig. 11 beschrieben ist, nur der lokale relative Energieverbrauch $E_{rel}$ für den einzelnen Produktionszyklus 23 zwischen zwei physikalischen Reinigungen 24 zugrundegelegt.

Solange die Steigung N der globalen Kurve, welche in Fig. 12 und Fig. 13 gezeigt ist, seit dem letzten CIP-Vorgang im Schritt S6 ihr Vorzeichen nicht ändert, schließt sich wieder der Schritt S3 an. Kommt es zu einer Änderung des Vorzeichens, das heißt das Minimum wird passiert bzw. überschritten, schließt sich im nächsten Schritt ein CIP-Vorgang 28 an. Danach wird das Verfahren im Schritt S1 erneut gestartet. Dieses Minimum entspricht dem Minimum 30 in Fig. 3.

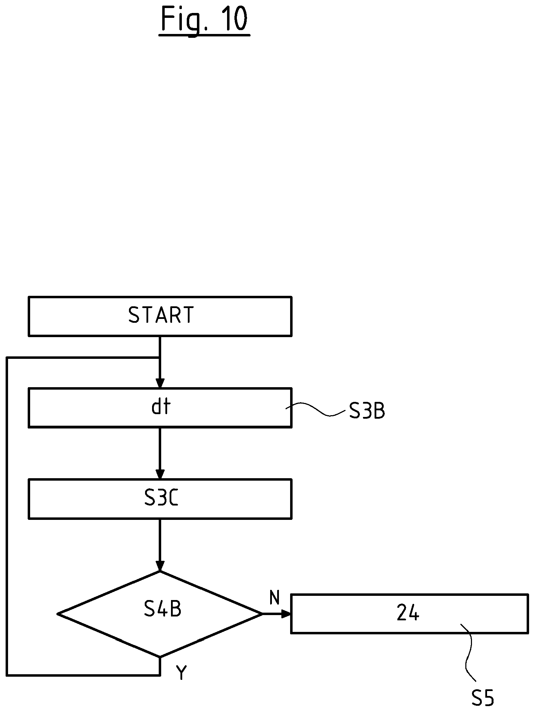

Im Schritt S3 in Fig. 9 wurde unterschieden, ob das Netto-Permeat-Volumen $Q_N$ das CIP-Volumen $Q_{CIP}$ überschritten hat, das heißt mehr Permeat produziert wurde, als im vorangehenden CIP-Vorgang verbraucht wurde. Solange dies nicht der Fall ist, wird der Zeitpunkt für eine physikalische Reinigung 24, wie vorangehend beschrieben, bestimmt. Sobald mehr Volumen produziert wurde, schließt sich an den Schritt S3 der Schritt X an, welcher in Fig. 10 beschrieben ist. Dann kann der Zeitpunkt der physikalischen Reinigung 24 ebenfalls anhand der globalen Kurve für den relativen Energieverbrauch $E_{rel}$ seit dem letzten CIP-Zyklus, das heißt über mehrere Produktionszyklen 23 hinweg bestimmt werden. Dies erfolgt wie in Fig. 10 beschrieben. Nach dem Start des Verfahrensablaufes im Anschluss an den Schritt S3 in Fig. 9 wird zunächst eine Verzögerung dt von einigen Sekunden im Schritt S3B abgewartet. Anschließend wird im Schritt S3C auf Grundlage der aktuellen Kurve des relativen Energieverbrauchs $E_{rel}$ über der Zeit die aktuelle Steigung dieser Kurve zum aktuellen Zeitpunkt bestimmt. Im Schritt S4B wird nun verglichen, ob die aktuell bestimmte Steigung günstiger ist als die Steigung in einem vorangehenden Berechnungsschritt, das heißt vor der Verzögerung dt. Ist die Steigung günstiger, schließt sich erneut der Schritt S3B an. Günstiger ist die Steigung, wenn sie steiler ist, wobei die Steigung negativ ist, da die Kurve in diesem Bereich monoton fallend ist. Wird der Kurvenverlauf flacher, das heißt der Betrag der Steigung kleiner, ist der Steigungsverlauf weniger optimal und es schließt sich an den Schritt S4B eine physikalische Reinigung 24 im Schritt S5 an, welcher dem Schritt S5 in Fig. 9 entspricht. Anschließend schließt sich wieder der Schritt S6 in Fig. 9 an. Das heißt bei dieser Verfahrensvariante wird der Zeitpunkt für die physikalische Reinigung 24 anhand der globalen Kurve für den relativen Energieverbrauch über einen gesamten CIP-Zyklus 26 bestimmt. Die physikalische Reinigung 24 wird dann gestartet, wenn die Steigung bzw. deren Betrag geringer, das heißt die Kurve flacher wird, das heißt die Verringerung des relativen Energieverbrauches sich verlangsamt. Die Fig. 12 und 13 zeigen zwei Kurven I und II für den globalen relativen Energieverbrauch, wobei bei der Kurve II die Zyklusdauer zwischen zwei physikalischen Reinigungen 24 gegenüber der Kurve I verkürzt ist, das heißt diese Kurve fällt steiler ab, ist insofern günstiger, da der globale relative Energieverbrauch geringer ist.

**Bezugszeichenliste**

2 Filterelement
4 Speisung
6 Zufuhrpumpe
8 Sammelbehälter
10 Konzentrat
12 Rückspülpumpe
14 Strömungssensor
16 erster Drucksensor
18 zweiter Drucksensor
20 Querströmung
22 Filterzyklus
23 Produktionszyklus
24 physikalische Reinigung
26 CIP-Zyklus
28 CIP-Vorgang
30 Minimum

$E_G$ Gesamtenergieverbrauch
$E_P$ Produktionsenergieverbrauch
$E_B$ Rückspülenergieverbrauch
$E_{rel}$ relativer Energieverbrauch
N Ableitung des relativen Energieverbrauches
$N_{STOP}$ Grenzsteigung
$Q_N$ Netto-Permeat-Volumen
$Q_P$ Permeat-Volumen
$Q_B$ Rückspülvolumen
$K_{CIP}$ CIP-Volumen

$Q_{bw}$ Spülstrom
$P_{bw}$ Spüldruck
$Q_{norm}$ normierter Spülstrom
$P_{norm}$ normierter Spüldruck
C Kennwert für den hydraulischen Widerstand
dC Abweichung des Kennwertes für den hydraulischen Widerstand
$C_{avg}$ laufender Durchschnitt des Kennwertes C
I Anzahl der Zyklen
$I_{CIP}$ Vorgabewert für die Zyklenzahl
TMP Druckdifferenz über dem Filterelement

**Patentansprüche**

1. Steuerverfahren für ein Filtersystem, welches wenigstens ein Filterelement aufweist, **dadurch gekennzeichnet, dass** während einer physikalischen Reinigung (24) des Filtersystems wenigstens ein Systemparameter (C), welcher ein hydraulischer Widerstand des Filtersystems ist, kontinuierlich überwacht wird und die physikalische Reinigung (24) so lange ausgeführt wird, bis dieser Systemparameter (C) stabil bleibt, wobei zum Erfassen des hydraulischen Widerstandes kontinuierlich der tatsächliche Druck ($P_{bw}$) über dem Filtersystem und der tatsächliche Durchfluss ($Q_{bw}$) durch das Filterelement (2) während der physikalischen Reinigung (24) erfasst werden und kontinuierlich normierte Werte $P_{norm}$ und Qnorm durch Division des erfassten Druckes $P_{bw}$ durch einen festgesetzten Maximaldruck $P_{bwmax}$ sowie durch Division des Quadrats des erfassten Durchflusses $Q_{bw}$ durch das Quadrat eines festgesetzten Sollwertes für den Durchfluss $Q_{bw\_set}$ bestimmt werden, und kontinuierlich ein Kennwert C für den hydraulischen Widerstand $C=Q_{norm}^2/P_{norm}$ gebildet wird und wobei eine Veränderung dC dieses Kennwertes C gemäß der Formel

$$dC = \frac{(C-C_{avg})}{C_{avg}}$$

bestimmt wird, indem die Differenz aus dem Kennwert C und einem laufenden Durchschnitt $C_{avg}$ gebildet und diese Differenz auf den laufenden Durchschnitt $C_{avg}$ bezogen wird, und die physikalische Reinigung fortgesetzt wird, solange die Veränderung dC größer als ein vorbestimmter Wert ist.

2. Steuerverfahren nach Anspruch 1, **gekennzeichnet durch** kontinuierliches Aufzeichnen eines Gesamtenergieverbrauches ($E_G$) während eines Filterzyklus (22) des Filtersystems, wobei der Gesamtenergieverbrauch ($E_G$) zumindest aus dem Energieverbrauch ($E_B$) für die physikalische Reinigung (24) und dem Energieverbrauch ($E_P$) für den anschließenden Produktionszyklus (23) bis zu einem vorbestimmten, insbesondere aktuellen Zeitpunkt besteht, Berechnen eines relativen Energieverbrauchs ($E_{rel}$) durch Division des aufgezeichneten Gesamtenergieverbrauches ($E_G$) durch ein Netto-Permeat-Volumen ($Q_N$), welches während des Filterzyklus (22) bis zu dem vorbestimmten Zeitpunkt produziert worden ist, Starten einer physikalischen Reinigung (24) in Abhängigkeit des relativen Energieverbrauches oder eines von diesem abgeleiteten Kennwertes.

3. Steuerverfahren nach Anspruch 2, **dadurch gekennzeichnet, dass** eine physikalische Reinigung zum aktuellen Zeitpunkt gestartet wird, wenn der relative Energieverbrauch ($E_{rel}$) oder der von diesem abgeleiteter Kennwert einen vorbestimmten Wert erreicht hat.

4. Steuerverfahren gemäß Anspruch 2 oder 3, **dadurch gekennzeichnet, dass** die physikalische Reinigung (24) begonnen wird, wenn der Betrag der Ableitung (N) des laufend bestimmten relativen Energieverbrauchs ($E_{rel}$) eine vorbestimmte Steigung ($N_{STOP}$) erreicht hat, insbesondere null entspricht oder ein Minimum passiert hat.

5. Steuerverfahren gemäß einem der Ansprüche 2 bis 4, **dadurch gekennzeichnet, dass** das Netto-Permeat-Volumen ($Q_N$) dem produzierten Permeat-Volumen ($Q_P$) abzüglich desjenigen Volumens ($Q_B$) entspricht, welches für eine physikalische Reinigung (24) und/oder ein Cleaning-in-Place (CIP) verwendet wird.

6. Steuerverfahren gemäß einem der Ansprüche 2 bis 5, **dadurch gekennzeichnet, dass** das Aufzeichnen des Gesamtenergieverbrauches ($E_G$) und des Netto-Permeat-Volumens ($Q_N$) vor der Ausführung einer physikalischen Reinigung (24) oder der Ausführung eines Cleaning-in-Place (CIP) neu gestartet wird.

7. Steuerverfahren gemäß einem der Ansprüche 2 bis 6 **dadurch gekennzeichnet, dass** die physikalische Reinigung (24) ein Rückspülen, eine Querströmung, ein mechanisches Abkratzen und/oder eine Luftspülung ist.

8. Steuerverfahren gemäß einem der Ansprüche 2 bis 7, **dadurch gekennzeichnet, dass** ein Cleaning-in-Place (28) gestartet wird, wenn der Druck (TMP) über dem Filterelement ein vorbestimmtes Maximum erreicht.

9. Steuerverfahren gemäß Anspruch 8, **dadurch gekennzeichnet, dass** der Zeitpunkt für das nächste Cleaning-in-Place (28) durch Extrapolation einer Kurve bestimmt wird, welche den Druck (TMP) über dem Filtersystem oder Filterelement am Ende des Filterzyklus (22) gegenüber der Anzahl von Filterzyklen (22) definiert.

10. Steuerverfahren gemäß Anspruch 4, **dadurch gekennzeichnet, dass** die vorbestimmte Steigung ($N_{STOP}$) in Abhängigkeit eines geschätzten Energieverbrauches angepasst wird, welcher auf Basis des Energieverbrauches einer Anzahl von vorangehenden Filterzyklen (22) bestimmt worden ist.

11. Steuerverfahren gemäß Anspruch 10, **dadurch gekennzeichnet, dass** zur Anpassung der vorbestimmten Steigung ($N_{STOP}$) eine Extrapolation des Energieverbrauches einer Anzahl von Filterzyklen berechnet wird, um den Energieverbrauch eines aktuellen Cleaning-in-Place-Zyklus (26) vorauszubestimmen, und dass ein solcher vorausbestimmter Energieverbrauch mit einem zuvor vorausbestimmten Energieverbrauch für den aktuellen Cleaning-in-Place-Zyklus (26) verglichen wird.

12. Steuerverfahren gemäß Anspruch 11, **dadurch gekennzeichnet, dass** die vorbestimmte Steigung ($N_{STOP}$) vergrößert wird, wenn der zuvor vorausbestimmte Energieverbrauch geringer als der aktuell vorausbestimmte Energieverbrauch ist.

13. Steuerverfahren gemäß Anspruch 11 oder 12, **dadurch gekennzeichnet, dass** die vorbestimmte Steigung ($N_{STOP}$) verringert wird, wenn der zuvor vorausbestimmte Energieverbrauch größer als der aktuell vorausbestimmte Energieverbrauch ist.

14. Steuerverfahren nach einem der Ansprüche 2 bis 7, **dadurch gekennzeichnet, dass**
der kontinuierlich aufgezeichnete Gesamtenergieverbrauch ($E_G$) zumindest dem Energieverbrauch ($E_{CIP}$) für ein Cleaning-in-Place (CIP), dem Energieverbrauch ($E_B$) für die erfolgten physikalischen Reinigungen (24) nach dem letzten Cleaning-in-Place (CIP) und dem Energieverbrauch ($E_P$) für die sich anschließenden Produktionszyklen (23) bis zu einem vorbestimmten, insbesondere aktuellen Zeitpunkt entspricht,
der relative Energieverbrauch ($E_{rel}$) auf Grundlage dieses Gesamtenergieverbrauches ($E_G$) kontinuierlich bestimmt wird, und ein Cleaning-in-Place (CIP) gestartet wird, wenn der relative Energieverbrauch ein Minimum erreicht oder passiert hat.

15. Steuerverfahren nach Anspruch 14, **dadurch gekennzeichnet, dass** der relative Energieverbrauch ($E_{rel}$) kontinuierlich berechnet und als Kurve über der Zeit aufgetragen wird, wobei eine physikalische Reinigung gestartet wird, wenn der Betrag der Steigung dieser Kurve sein Maximum erreicht bzw. passiert hat.

16. Steuerverfahren gemäß einem der Ansprüche 2 bis 15, **gekennzeichnet durch** eine Querströmung in dem Filtersystem, wobei die Querströmung basierend auf der aktuellen Permeat-Strömung eingestellt wird.

17. Steuerverfahren gemäß Anspruch 16, **dadurch gekennzeichnet, dass** die Querströmung vergrößert wird, wenn die Permeat-Strömung geringer als ein vorbestimmter Grenzwert ist, und die Querströmung verringert wird, wenn die Permeat-Strömung oberhalb eines vorbestimmten Grenzwertes liegt.

18. Steuerverfahren nach Anspruch 16 oder 17, **dadurch gekennzeichnet, dass** der relative Energieverbrauch ($E_{rel}$) für einen laufenden Produktionszyklus für verschiedene mögliche Querströmungen simuliert wird und diejenige Querströmung ausgewählt wird, bei welcher die simulierte Kurve für den relativen Energieverbrauch ($E_{rel}$) das niedrigste Minimum erreicht.

19. Steuerverfahren nach einem der Ansprüche 2 bis 18, **dadurch gekennzeichnet, dass** ein erzeugtes Netto-Permeat-Volumen pro Zeiteinheit mit einem Zielvolumen verglichen wird, wobei die Produktionsmenge bei Übersteigen des Zielvolumens reduziert und bei Unterschreiten des Zielvolumens erhöht wird.

**Claims**

1. A control method for a filter system which comprises at least one filter element, **characterised in that** at least one system parameter (C) which is a hydraulic resistance of the filter system is continuously monitored during a physical cleaning (24) of the filter system, and the physical cleaning (24) is carried out for so long until this system parameter (C) remains stable, wherein for detecting the hydraulic resistance, the actual pressure ($P_{bw}$) across the filter system and the actual throughput ($Q_{bw}$) through the filter element (2) are continuously detected during the physical cleaning (24) and normalised values $P_{norm}$ and $Q_{norm}$ are continuously determined by way of division of the detected pressure $P_{bw}$ by a set maximal pressure $P_{bwmax}$ as well as by division of the square of the detected throughput $Q_{bw}$ by the square of a set setpoint for the throughput $Q_{bw\_set}$, and a characteristic value C for the hydraulic resistance $C = Q_{norm}^2/P_{norm}$ is continuously formed and wherein a change dC of this characteristic value C is determined according to the formula

$$dC = \frac{(C - C_{avg})}{C_{avg}}$$

by way of the difference of the characteristic value C and a running average $C_{avg}$ being formed and this difference being related to the running average $C_{avg}$, and the physical cleaning being continued as long as the change dC is greater than a predefined value.

2. A control method according to claim 1, **characterised by** continuously recording a total energy consumption ($E_G$) during a filtration cycle (22) of the filter system, wherein the total energy consumption ($E_G$) consists at least of the energy consumption ($E_B$) for the physical cleaning (24) and the energy consumption ($E_P$) for the subsequent production cycle (23) up to a predefined, in particular current point in time, computing a relative energy consumption ($E_{rel}$) by way of division of the recorded total energy consumption ($E_G$) by a net permeate volume ($Q_N$) which has been produced during the filtration cycle (22) up to the predefined point in time, starting a physical cleaning (24) in dependence on the relative energy consumption or on a characteristic value derived from this.

3. A control method according to claim 2, **characterised in that** a physical cleaning is started at the current point in time, when the relative energy consumption ($E_{rel}$) or the characteristic value which is derived from this has reached a predefined value.

4. A control method according to claim 2 or 3, **characterised in that** the physical cleaning (24) is begun when the magnitude of the derivative (N) of the continuously determined relative energy consumption ($E_{rel}$) has reached a predefined gradient ($N_{STOP}$), in particular corresponds to zero or has passed a minimum.

5. A control method according to one of the claims 2 to 4, **characterised in that** the net permeate volume ($Q_N$) corresponds to the produced permeate volume ($Q_P$) minus that volume ($Q_B$) which is used for a physical cleaning (24) and/or a cleaning-in-place (CIP).

6. A control method according to one of the claims 2 to 5, **characterised in that** the recording of the total energy consumption ($E_G$) and of the net permeate volume ($Q_N$) is started anew before carrying out a physical cleaning (24) or carrying out a cleaning-in-place (CIP).

7. A control method according to one of the claims 2 to 6, **characterised in that** the physical cleaning (24) is a backwashing, a crossflow, a mechanical scraping and/or an air scouring.

8. A control method according to one of the claims 2 to 7 , **characterised in that** a cleaning-in-place (28) is started when the pressure (TMP) across the filter element reaches a predefined maximum.

9. A control method according to claim 8, **characterised in that** the point in time for the next cleaning-in-place (28) is determined by way of extrapolation of a curve which defines the pressure (TMP) across the filter system or a filter element at the end of the filtration cycle (22), with respect to the number of filtration cycles (22).

10. A control method according to claim 4, **characterised in that** the predefined gradient ($N_{STOP}$) is adapted in dependence on an estimated energy consumption which has been determined on the basis of the energy consumption of a number of preceding filtration cycles (22).

11. A control method according to claim 10, **characterised in that** for adapting the predefined gradient ($N_{STOP}$), an extrapolation of the energy consumption of a number of filtration cycles is computed, in order to predict the energy consumption of a current cleaning-in-place cycle (26), and that such a predicted energy consumption is compared with a previously predicted energy consumption for the current cleaning-in-place cycle (26).

12. A control method according to claim 11, **characterised in that** the predefined gradient ($N_{STOP}$) is increased when the previously predicted energy consumption is smaller than the currently predicted energy consumption.

13. A control method according to claim 11 or 12, **characterised in that** the predefined gradient ($N_{STOP}$) is reduced when the previously predicted energy consumption is greater than the currently predicted energy consumption.

14. A control method according to one of the claims 2 to 7, **characterised in that**
the continuously recorded total energy consumption ($E_G$) corresponds at least to the energy consumption ($E_{CIP}$) for a cleaning-in-place (CIP), to the energy consumption ($E_B$) for the effected physical cleanings (24) after the last cleaning-in-place (CIP) and to the energy consumption ($E_P$) for the subsequent production cycles (23) up to a predefined, in particular current point in time,
the relative energy consumption ($E_{rel}$) is continuously determined on the basis of this total energy consumption ($E_G$) and
a cleaning-in-place (CIP) is started when the relative energy consumption has reached or passed a minimum.

15. A control method according to claim 14, **characterised in that** the relative energy consumption ($E_{rel}$)

is continuously computed and is plotted as a curve over time, wherein a physical cleaning is started when the magnitude of the gradient of this curve has reached or passed its maximum.

16. A control method according to one of the claims 2 to 15, **characterised by** a crossflow in the filter system, wherein the crossflow is adjusted on the basis of the current permeate flow.

17. A control method according to claim 16, **characterised in that** the crossflow is increased when the permeate flow is smaller than a predefined limit value, and the crossflow is reduced when the permeate flow lies above a predefined limit value.

18. A control method according to claim 16 or 17, **characterised in that** the relative energy consumption ($E_{rel}$) for a running production cycle is simulated for different possible crossflows and that crossflow, at which the simulated curve for the relative energy consumption ($E_{rel}$) reaches the lowest minimum, is selected.

19. A control method according to one of the claims 2 to 18, **characterised in that** a produced net permeate volume per unit of time is compared to a target volume, wherein the production quantity is reduced on exceeding the target volume and is increased on falling short of the target volume.


**Revendications**

1. Procédé de commande destiné à un système de filtre présentant au moins un élément filtrant, **caractérisé en ce que**, lors d'un nettoyage physique (24) du système de filtre, au moins un paramètre de système (C), qui est une résistance hydraulique du système de filtre, est surveillé de manière continue, et le nettoyage physique (24) est exécuté jusqu'à ce que ledit paramètre de système (C) reste stable, dans lequel la pression effective ($P_{bw}$) exercée au sein du système de filtre et le débit effectif ($Q_{bw}$) via l'élément filtrant (2) sont captés de manière continue pendant le nettoyage physique (24) en vue de capter la résistance hydraulique, et des valeurs normalisées $P_{norm}$ et Qnorm sont déterminées de manière continue en divisant la pression $P_{bw}$ captée par une pression maximale $P_{bwmax}$ définie ainsi qu'en divisant le carré du débit $Q_{bw}$ capté par le carré d'une valeur de consigne du débit $Q_{bw}$ définie, et une valeur caractéristique C de la résistance hydraulique $C=Q_{norm}^2/P_{norm}$ est formée de manière continue, et dans lequel une modification dC de ladite valeur caractéristique C est déterminée conformément à la formule

$$dC = \frac{(C - C_{avg})}{C_{avg}}$$

en calculant la différence entre la valeur caractéristique C et une moyenne $C_{avg}$ actuelle et en rapportant cette différence à la moyenne $C_{avg}$ actuelle, et le nettoyage physique est poursuivi tant que la modification dC est supérieure à une valeur prédéterminée.

2. Procédé de commande selon la revendication 1, **caractérisé par** les étapes consistant à enregistrer de manière continue une consommation totale d'énergie ($E_G$) pendant un cycle de filtration (22) du système de filtre, la consommation totale d'énergie ($E_G$) étant composée au moins de la consommation d'énergie ($E_B$) nécessaire au nettoyage physique (24) et de la consommation d'énergie ($E_P$) nécessaire au cycle de production (23) ultérieur jusqu'à un instant prédéterminé, en particulier jusqu'à l'instant actuel, calculer une consommation relative d'énergie ($E_{rel}$) en divisant la consommation totale d'énergie ($E_G$) enregistrée par un volume net de perméat ($Q_N$) qui a été produit pendant le cycle de filtration (22) jusqu'à l'instant prédéterminé, initier un nettoyage physique (24) en fonction de la consommation relative d'énergie ou d'une valeur caractéristique dérivée de celle-ci.

3. Procédé de commande selon la revendication 2, **caractérisé en ce qu'**un nettoyage physique est initié à l'instant actuel lorsque la consommation relative d'énergie ($E_{rel}$) ou la valeur caractéristique dérivée de celle-ci a atteint une valeur prédéterminée.

4. Procédé de commande selon la revendication 2 ou 3, **caractérisé en ce que** le nettoyage physique (24) est initié lorsque le montant de la dérivée (N) de la consommation relative d'énergie ($E_{rel}$) déterminée actuelle a atteint un gradient prédéterminé ($N_{STOP}$), en particulier lorsqu'elle est égale à zéro ou lorsqu'elle a dépassé un minimum.

5. Procédé de commande selon l'une des revendications 2 à 4, **caractérisé en ce que** le volume net de perméat ($Q_N$) correspond au volume de perméat produit ($Q_P$) dont on retranche le volume ($Q_B$) qui est utilisé pour un nettoyage physique (24) et/ou un nettoyage en place (CIP).

6. Procédé de commande selon l'une des revendications 2 à 5, **caractérisé en ce que** l'enregistrement de la consommation totale d'énergie ($E_G$) et du volume net de perméat ($Q_N$) est recommencé avant l'exécution d'un nettoyage physique (24) ou l'exécution d'un nettoyage en place (CIP).

**7.** Procédé de commande selon l'une des revendications 2 à 6, **caractérisé en ce que** le nettoyage physique (24) est un lavage à contre-courant, un écoulement transversal, un grattage mécanique et/ou un lavage à l'air.

**8.** Procédé de commande selon l'une des revendications 2 à 7, **caractérisé en ce qu'**un nettoyage en place (28) est initié lorsque la pression (TMP) exercée sur l'élément filtrant atteint un maximum prédéterminé.

**9.** Procédé de commande selon la revendication 8, **caractérisé en ce que** l'instant prévu pour le prochain nettoyage en place (28) est déterminé par extrapolation d'une courbe qui définit la pression (TMP) exercée au sein du système de filtre ou sur l'élément filtrant à la fin du cycle de filtration (22) par rapport au nombre de cycles de filtration (22).

**10.** Procédé de commande selon la revendication 4, **caractérisé en ce que** le gradient prédéterminé ($N_{STOP}$) est adapté en fonction d'une consommation d'énergie estimée qui a été déterminée sur la base de la consommation d'énergie d'un nombre de cycles de filtration (22) précédents.

**11.** Procédé de commande selon la revendication 10, **caractérisé en ce que**, en vue de l'adaptation du gradient prédéterminé ($N_{STOP}$), une extrapolation de la consommation d'énergie d'un nombre de cycles de filtration est calculée afin de prédire la consommation d'énergie d'un cycle de nettoyage en place (26) actuel, et **en ce qu'**une telle consommation d'énergie prévue est comparée à une consommation d'énergie antérieurement prévue pour le cycle de nettoyage en place (26) actuel.

**12.** Procédé de commande selon la revendication 11, **caractérisé en ce que** le gradient prédéterminé ($N_{STOP}$) est augmenté lorsque la consommation d'énergie antérieurement prévue est inférieure à la consommation d'énergie actuellement prévue.

**13.** Procédé de commande selon la revendication 11 ou 12, **caractérisé en ce que** le gradient prédéterminé ($N_{STOP}$) est diminué lorsque la consommation d'énergie antérieurement prévue est supérieure à la consommation d'énergie actuellement prévue.

**14.** Procédé de commande selon l'une des revendications 2 à 7, **caractérisé en ce que** la consommation totale d'énergie ($E_G$) enregistrée de manière continue correspond au moins à la consommation d'énergie ($E_{CIP}$) nécessaire pour un nettoyage en place (CIP), à la consommation d'énergie ($E_B$) nécessaire pour le nettoyage physique (24) intervenu après le dernier nettoyage en place (CIP) et à la consommation d'énergie ($E_P$) nécessaire pour les cycles de production (23) ultérieurs jusqu'à un instant prédéterminé, en particulier l'instant actuel, la consommation relative d'énergie ($E_{rel}$) est déterminée de manière continue sur la base de ladite consommation totale d'énergie ($E_G$), et un nettoyage en place (CIP) est initié lorsque la consommation relative d'énergie a atteint ou dépassé un minimum.

**15.** Procédé de commande selon la revendication 14, **caractérisé en ce que** la consommation relative d'énergie ($E_{rel}$) est calculée de manière continue et est représentée sous la forme d'une courbe en fonction du temps, un nettoyage physique étant initié lorsque le montant du gradient de ladite courbe a atteint ou dépassé son maximum.

**16.** Procédé de commande selon l'une des revendications 2 à 15, **caractérisé par** un écoulement transversal dans le système de filtre, l'écoulement transversal étant ajusté en se basant sur l'écoulement de perméat actuel.

**17.** Procédé de commande selon la revendication 16, **caractérisé en ce que** l'écoulement transversal est augmenté lorsque l'écoulement de perméat est inférieur à une valeur limite prédéterminée, et l'écoulement transversal est réduit lorsque l'écoulement de perméat est supérieur à une valeur limite prédéterminée.

**18.** Procédé de commande selon la revendication 16 ou 17, **caractérisé en ce que** la consommation relative d'énergie ($E_{rel}$) nécessaire à un cycle de production actuel est simulée pour divers écoulements transversaux possibles et ledit écoulement transversal pour lequel la courbe simulée nécessaire à la consommation relative d'énergie ($E_{rel}$) atteint le minimum le plus bas est sélectionné.

**19.** Procédé de commande selon l'une des revendications 2 à 18, **caractérisé en ce qu'**un volume net de perméat produit par unité de temps est comparé à un volume cible, la quantité de production étant réduite lorsqu'elle dépasse le volume cible et étant augmentée lorsqu'elle descend sous le volume cible.

## Fig. 1a

## Fig. 1b

# Fig. 2

# Fig. 3

# Fig. 4

START — S1

S2 —
$$Q_{B1}$$
$$E_{B1}$$

S3 —
$$E_{rel} = (E_p + E_B)/(Q_p - Q_B)$$

S4 — $N = N_{stop}$   N

Y

S5 — STOP

S6

# Fig. 5

# Fig. 6

START — S1

S2 — $Q_{B1}$
$E_{B1}$
$I=0$
$N_{stop}=0$

S3 — $E_{rel}=(E_p+E_B)/(Q_p-Q_B)$

S4 — $N=N_{stop}?$ — N

Y

S4B — $I=I_{CIP}?$ — Y → S7

N

S7 → S8

S8 — N → $N_{stop}=N_{stop}-deltaN$ — S9

Y → $N_{stop}=N_{stop}+deltaN$ — S10

STOP — S5

S6

# Fig. 7

```
S1 ─────( START )

S2 ─────┌─────────────────────────────┐
        │      dQ=xxm³/h               │
        │  Q crossflow max=xxm³/h      │
        │           i=0               │
        │      Flux_ref=xxm³/h        │
        └─────────────────────────────┘

S3 ─────┌─────────────────────────────┐
        │ Q crossflow =Q crossflow_max+dQxi │
        └─────────────────────────────┘

S4 ─────◇ Flux<Flux_ref? ◇──N──┌──────────┐
                               │  i=i−1   │───── S8
                               └──────────┘
              │ Y

S5 ─────┌─────────────────────────────┐
        │ Q crossflow =Q crossflow_max+dQxi │
        └─────────────────────────────┘

S6 ─────◇ Flux<Flux_ref? ◇──Y──┌──────────┐
              │ N               │  i=i+1   │───── S7
                               └──────────┘
```

$dQ = xx \, m^3/h$

$Q_{crossflow\ max} = xx \, m^3/h$

$i = 0$

$Flux_{ref} = xx \, m^3/h$

$Q_{crossflow} = Q_{crossflow\_max} + dQ \times i$

$Flux < Flux_{ref}?$

$i = i-1$

$Q_{crossflow} = Q_{crossflow\_max} + dQ \times i$

$Flux < Flux_{ref}?$

$i = i+1$

## Fig. 8

START — S1

$Q_{bw\_set} = xx \ m^3/h$
$P_{bw\_max} = xx \ bar$ — S2

S3 —
$P_{norm} = P_{bw}/P_{bw\_max}$
$Q_{norm} = Q_{bw}^2/Q_{bw\_set}^2$
$C = Q_{norm}^2/P_{norm}$

S4 —
$dC = (C - C_{avg\_xxsec.})/C_{avg. xxsec.}$

S5 — $dC < xx \ e.g. \ 0.1(10\%)$ — N

Y

S6 — STOP

# Fig. 9

```
                        ┌─────────────────────┐
                        │        Start        │────  S1
                        └─────────────────────┘
                                   │
                                   ▼
                        ┌─────────────────────┐
                        │       Q_N = 0       │────  S2
                        └─────────────────────┘
                                   │
                                   ▼
                              ◇─────────◇
                       Y     ╱  Q_N > Q_CIP ?  ╲    N        S3
                     ◄──────◇                  ◇──────►
                              ╲─────────╱
                                   │
              ┌──────────────┐         ┌──────────────┐
              │      X       │         │      X1      │
              └──────────────┘         └──────────────┘
                                   │
                                   ▼
                        ┌─────────────────────┐
                        │         24          │────  S5
                        └─────────────────────┘
                                   │
                                   ▼
                              ◇─────────◇
                   N         ╱    N?     ╲
                  ◄─────────◇             ◇
                              ╲─────────╱
                                   │  Y                    S6
                                   ▼
                        ┌─────────────────────┐
                        │       CIP 28        │
                        └─────────────────────┘
```

# Fig. 11

```
                    ┌─────────────────────────────┐
                    │           START             │
                    └─────────────────────────────┘
                                  │
                                  ▼
                    ┌─────────────────────────────┐
                    │                             │
                    │  E_rel = (E_p+E_B)/(Q_p-Q_B) │ ─── S3A
                    │                             │
                    └─────────────────────────────┘
                                  │
                                  ▼          S4A
                              ◇─────────◇
                             ╱           ╲     Y     ┌──────────────────┐
                            ◇   N > 0 ?    ◇ ──────► │        24        │
                             ╲           ╱           └──────────────────┘
                              ◇─────────◇                     │
                                  │  N                       S5
```

$$E_{rel} = (E_p + E_B) / (Q_p - Q_B)$$

S3A

S4A

N > 0 ?

Y

24

N

S5

## Fig. 12

## Fig. 13

**IN DER BESCHREIBUNG AUFGEFÜHRTE DOKUMENTE**

**In der Beschreibung aufgeführte Patentdokumente**

- US 20070138092 A1